(19) Europäisches Patentamt
European Patent Office
Office européen des brevets

(11) EP 2 541 483 A1

(12) EUROPEAN PATENT APPLICATION

(43) Date of publication:
**02.01.2013 Bulletin 2013/01**

(51) Int Cl.:
***G06Q 30/00*** *(2012.01)*

(21) Application number: **11305856.4**

(22) Date of filing: **01.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.06.2011 EP 11305812**

(71) Applicant: **Amadeus S.A.S.**
**06410 Biot (FR)**

(72) Inventors:
- **Behlouli, Nabil**
**06600 Antibes (FR)**
- **El Khoury, Roger**
**06250 Mougins (FR)**

(74) Representative: **Anderson, Angela Mary**
**Murgitroyd & Company**
**Immeuble Atlantis**
**55 Allée Pierre Ziller**
**Sophia Antipolis**
**06560 Valbonne (FR)**

# (54) Method and system for revenue management system based on market pricing

(57) The method according to a preferred embodiment of the present invention allows a comprehensive and unbiased analysis on hotel prices for a market. It allows to position a particular hotel vis-à-vis the market characteristics where it is located. This market price analysis is integrated into a revenue management system in order to update price recommendations based on market elements which are external to the hotel. The method according to the present invention poses no limit to the number of competitors against whom the hotel own rates are benchmarked, its purpose being to provide a global market vision. Hoteliers do not even need to figure out whom they are competing with. The method provides new analyses on market trends and it allows the hotel user to truly position his property vis-à-vis the market over time. At last, it provides insightful recommendations based on user rules which are self explainable.

EP 2 541 483 A1

## Description

### Field of the invention

The present invention relates to the field of management of inventory data, particularly to a method and system for revenue management of resources (e.g. travel resources such as hotel rooms, car rental or tickets for shows or sport events) based on market pricing.

### Background of the invention

Service resources, in particular travel related resources (e.g. hotel rooms, rented cars, flight seats), but also for example tickets for shows or sport events must be treated as perishable goods as they are lost if not sold in time. To try to maximise the revenue and the exploitation of such resources, several techniques have developed in recent years, normally called revenue techniques. They are based on the attempt to understand the customers' needs and requests in order to sell as many resources as possible together with maximising the revenue. One of the goals of the revenue management techniques is to maximise the exploitation of the available resources, i.e. to minimize the available resources which are not allocated, for example empty rooms in a hotel or non-rented cars for a rental company. Any resource which is not allocated by a certain time is a loss for the company. A key factor is the price at which the resource is offered, which should take into considerations many aspects, including the availability of similar resources by possible competitors.

Revenue management has always been an integral part of hotel operations, and for that matter, early automated systems were good at comparing booking up patterns for different market segments against historic trends and then recommending rate and length of stay adjustments.

Today things are different. With the internet distribution playing more and more a dominant role, the reference marks of old have substantially lost their relevance. Market segments have become harder to distinguish as guests now book through multiple channels, more impulsive buying habits give hotels less time to react to new trends and prices have become more volatile than ever.

As a result, revenue management systems for hotels have moved away from the traditional management of inventory and capacity allocation to embrace price optimization based on a combination of competitor rate analysis and demand forecast.

However, for hotels that are not competing on price alone, or simply for hotels that operate in a large marketplace with hundreds of hotels all possibly competing, there is no revenue management today that can truly answer their requirements.

State of the art revenue management is currently relying on third party rate shopping tools, which search for competitive rates on a number of channels.

The tools require that the hotel user explicitly identifies the competitive set and the channels on which the rate search will be performed.

The rate shopping tool providers levy a search fee on each search transaction performed by hotel, by date, by channel, by rate type. These rate shopping tool providers do not necessarily have an agreement with the channels they do shopping on. Therefore, when they don't, it may result in service disruption to the end user - when the channel changes or cuts off access to its information. Also the number of hotels which can be shopped for is limited for both performance and cost reasons. It is usually less than 20, for less than 10 channels. Another drawback of rate shopping tools is that they normally necessitate a prior definition of a compete set. Now, it turns out that most hotels do not exactly know whom they are competing with.

Commercially available revenue management systems normally use the competitor information either as an overlay next to their own price recommendations (there is no added value), or in a black box fashion, overriding the current recommendation by a new price without an explanation. This can be a problem as the direct competitor set is not always reflecting the real competition of the hotel and competitors' prices may fluctuate without any reason affecting negatively/wrongly the hotel price recommendations.

### Object of the invention

An object of the present invention is to alleviate at least some of the problems associated with the prior art systems.

According to one aspect of the present invention there is provided a revenue management method for maximizing, through a client-server data processing system, the exploitation on a predetermined time interval of a plurality of perishable service resources by a first provider of service resources, each resource of the plurality of perishable service resources being classified according to a plurality of criteria and having an expected offer price, the data processing system having access to a data base containing information on price of service resources offered by a plurality of competitor providers of service resources, the method including the steps of: obtaining from a repository information on service resources of the first provider according to the plurality of criteria; selecting a set of providers of the plurality of competitor providers, offering service resources having a score indicative of the similarity of the resource with the resources of the first provider, the similarity being based on at least one of the plurality of criteria; enquiring the data base for obtaining information on price of service resources of selected providers; estimating an average price of selected resources for the predetermined time interval; adjusting the expected offer price according to the estimated average price and a set of predetermined market influencer parameters.

The method according to a preferred embodiment of the present invention allows a comprehensive and unbiased analysis on hotel prices for a market. It allows to position a particular hotel vis-à-vis the market characteristics where it is located. This market price analysis is integrated into a revenue management system in order to update price recommendations based on market elements which are external to the hotel.

The method according to the present invention poses no limit to the number of competitors against whom the hotel own rates are benchmarked, its purpose being to provide a global market vision. Hoteliers do not even need to figure out whom they are competing with. The method provides new analyses on market trends and it allows the hotel user to truly position his property vis-à-vis the market over time. At last, it provides insightful recommendations based on user rules which are self explainable.

The method according to a preferred embodiment of the present invention provides a comprehensive and unbiased analysis on hotel prices for a market. It allows to position a particular hotel vis-à-vis the market characteristics where it is located. This market price analysis is integrated into a revenue management system in order to update price recommendations based on market elements which are external to the hotel. To gather the needed information, the market pricing tool is connected to a source of information providing such data and the analysis is based on the data extracted from the hotel distribution platform. More generally, those skilled in the art will appreciate that such data can be obtained from any rate shopping tools (e.g. Rubicon, TravelClick, eClerx, Rate Tiger to name a few). The more complete and up to date is the rate shopping tool, the more accurate will be the market price analysis.

Finding a relevant correlation between market prices and time periods is another important issue which is addressed by the method and system of the present invention. In a preferred embodiment of the present invention the traditional $R^2$ coefficient which measures the correlation degree between variables was increased using a Meier smoothing method period 3 based on a floating average concept.

Because hotel descriptive content (rate codes, room types) is not formatted, a semantic analysis algorithm to fine tune the search algorithm would be beneficial. The algorithm used in a preferred embodiment of the present invention is error-tolerant, which means that it detects string occurrences which are 'close to' the initial search item (for example, best unrestricted rate for best available rate).

The advantages of the present approach consists in the ability

- to search on large hotel content with heterogeneous rate and room type descriptions,
- to aggregate such content and determine a correlation between prices and time leads,
- to integrate the correlation analyses into the revenue management price recommendations.

According to a second aspect of the present invention there is provided a system comprising one or more components adapted to perform the method described above.

According to a further embodiment of the present invention there is provided a computer program comprising instructions for carrying out the method described above when said computer program is executed on a computer system.

**Brief description of drawings**

Reference will now be made, by way of example, to the accompanying drawings, in which:

Figure 1 is a diagram of a Revenue Management System including the market pricing tool in accordance with one embodiment of the present invention;

Figure 2 is a diagram of a general computer system adapted to support the method of a preferred embodiment of the present invention;

Figure 3 is a schematic representation of the main software components of the system according to a preferred embodiment of the present invention;

Figure 4 shows the steps to retrieve hotel availability with a method according to an embodiment of the present invention;

Figure 5 shows a diagram example of price evolution over 7 days

Figure 6 shows a diagram example of comparison between competitors' trend;

Figures 7 to 17 show some user interface screen shots of a possible application implementing the method of the present invention;

Figure 18 is a diagram showing the flow of information according to one embodiment of the present invention.

**Detailed description of the embodiments**

The Market Pricing method according to a preferred embodiment of the present invention is a new way at looking globally at a hotel market, a market being defined as a geographical region (a city, an area of interest, a destination, etc) which generates demand. Of course, not all hotels will benefit equally from the demand for the market, but all are depending on it. The Market Pricing method includes recording overtime the market price trends and the relative positioning of a specific property vis-à-vis the market in which it operates in order to influence the price recommendations which are computed e.g. in real time using the unconstrained demand for the specific property. The unconstrained demand for a product (in this case, a hotel room) is the amount of reservation requests which can be expected for this product, irrespective of its price and availability. It is a major output of all state-of-the-art revenue management systems. According to a preferred embodiment of the present invention, the method takes advantage of the tremendous wealth of data on hotel rates and availabilities which is held in any appropriate data base. Because such a data base may host information from thousands of hotels, it provides an exhaustive vision of any market and in particular of the market in which a specific hotel operates. Coupled with a powerful search algorithm, and a semantic analysis of hotel content description, this invention is a real breakthrough in hotel revenue management. Thanks to this, there is no need anymore to search manually for competing hotels nor to create and maintain fastidious lists of competitors.
However as mentioned above, those skilled in the art will appreciate that other rate shopping tools could be used instead.

Figure 1 shows a Revenue Management System suitable to implement the method and system according to a preferred embodiment of the present invention. The whole system includes two separate sections. The first one 101 is controlled by an Application Server and is necessary for collecting data from rate shoppers module. In a preferred embodiment of the present invention an automatic process is triggered on daily basis to retrieve data from different rate shoppers. The data will be first stored in the common database for all rate shoppers and customers. The information shopped from the different interfaces is controlled before being replicated in the different customers' databases.
The second section 103 is for data aggregation. In a preferred embodiment of the present invention the data aggregation process is integrated in the daily hotel processing scripts more specifically during the best available rate calculation. The objective is to calculate dynamic best available rate with the market trend impact.

The method according to a preferred embodiment of the present invention can be implemented in a Revenue Management System (RMS). The Revenue Management System according to a preferred embodiment of the present invention is organised according to a client/server architecture, wherein the Database Server receives customer requests by a plurality of client modules, each client module acting on behalf of one or more Customers (e.g. a Hotel or Travel Agent). The technical architecture will be scalable and totally Web 2.0 compliant.

With reference to Figure 2 a generic computer of the system (e.g. computer, Market Pricing module server, data base management subsystem, router, network server) is denoted with 250. The computer 250 is formed by several units that are connected in parallel to a system bus 253. In detail, one or more microprocessors 256 control operation of the computer 250; a RAM 259 is directly used as a working memory by the microprocessors 256, and a ROM 262 stores basic code for a bootstrap of the computer 250. Peripheral units are clustered around a local bus 265 (by means of respective interfaces). Particularly, a mass memory consists of a hard-disk 268 and a drive 271 for reading CD-ROMs 274. Moreover, the computer 250 includes input devices 277 (for example, a keyboard and a mouse), and output devices 280 (for example, a monitor and a printer). A Network Interface Card 283 is used to connect the computer 250 to the network. A bridge unit 286 interfaces the system bus 253 with the local bus 265. Each microprocessor 256 and the bridge unit 286 can operate as master agents requesting an access to the system bus 253 for transmitting information. An arbiter 289 manages the granting of the access with mutual exclusion to the system bus 253. Similar considerations apply if the system has a different topology, or it is based on other networks. Alternatively, the computers have a different structure, include equivalent units, or consist of other data processing entities (such as PDAs, mobile phones, and the like).

The method according to a preferred embodiment of the present invention is organised in 4 main functional modules as represented in Figure 3. The 4 functional modules, each one allowing customization by the user, are: Market Definition Workbench module 301, Market Search Engine 303, Market Data Analyses module 305 and Market Influence module 307. Each module will be now described in details.

**Market Definition Workbench module**

This module defines the characteristics of the competing set (using e.g. a semantic text search algorithm) and to launch an availability search over the refined set. The user interface allows the hotel user to perform the following actions:

- browse through the imported data, and while doing so, set a weight to hotels of the list;
- exclude some of the hotels from the final market list;
- request availability for the hotels of the resulting short list.

In order to prepare for the availability search, a default search profile is defined for all hotels. In a preferred embodiment it contains e.g. the following information:

- Length of stay, that is, the ability to request an availability by date of arrival and by length of stay;
- Number of guests, i.e. the ability to request availability for a total number of guests per room;
- Horizon, i.e. the time period in the future for which the availability should be checked.

The hotel profile could be updated by the user.

In order to facilitate the hotel competitor selection a default list of neighbours/competitor is displayed in administration screen. This list is ordered by geographical localization of the hotel neighbours.

An automatic selection of the competition set can be provided by an interface with a third party that will base the selection on hotel profile and services comparisons. The list could be overwritten by the user.

Using again the web service API, the availability will be looked for in the hotel distribution platform and then stored in the Revenue Management database. This process will be run typically on a daily basis. At this stage, the user will select the rate types and the room types which will be integrated into the market pricing analysis. Because rates and room types are specific to each hotel and there is little standardization, an algorithm has been developed which performs semantic search on the imported hotel data to facilitate this task.

**Market Search Engine**

With this module, the hotel user can define the market in which the hotel operates. Basing his search on e.g. the Point of Reference (POR) application, the user will typically define a radius - in miles or in kilometres - (e.g. by default set to 10Km) which will be used by the search engine to look for all the hotels which are located within the specified distance of the user hotel. The search can be refined to include only hotels of a specific category (Hotel Profile). The search engine will extract the data from the hotel distribution platform relying on the web service API. The corresponding data is then loaded into the Revenue Management database. Typically, this module will be run from time to time, for example once per month.

Necessary steps for any Rate Shopping Interfaces:

Different steps to retrieve hotel availability have to be implemented as represented in Figure 4. Two steps are mandatory to retrieve data from the rate shoppers and aggregate them. The setting stage is different from one rate shopper to another depending on the way how the data is retrieved. The refresh of the data must be made once per month for the steps of neighbour hotels selection and profile pickup. As for the rates themselves, they can be refreshed once a day whatever the data feed. The aggregation step is common to all rate shoppers and included in the daily processing of the hotel.

In order to setup the market pricing functionality, the hotel neighbours' list will be downloaded by running a specific command that will insert the specified user hotel into the common market pricing database with specific data retrieved from the customer database such as the "hotelcode_id, hotelcode and database_id". Then the list of neighbour hotels will be retrieved from the relevant Web services in a given radius (e.g. 10 kilometres).

This request is triggered once a month to add a new hotel neighbour when detected. It uses global parameters to import hotel's neighbours such as:

- Exact hotel name in the appropriate data base
- Country code

- Search horizon: G for Km and M for Miles. By default, the radius search will be set to 10 Km.

To set up the list of competitors, two screens are created: Hotel profile and Hotel competitors' screens (e.g. as described later with reference to Figure 7 and Figure 8). The hotel profile screen is used for the interface for the other rate shoppers; the required profile is predefined on the relevant application.
The Hotel profile screen enables user to define the attributes of availability requests for each hotel to be run on a daily basis. The competitors set screen allows a user to select a short list of hotels competitors among the complete neighbours' list.
If the user hotel is not available in the appropriate data base, the command can be launched based on the hotel city code in order to retrieve all the hotels located in this city from the existing neighbour hotel list of the hotel database.

Competing Hotels

Once the neighbours' list is downloaded, the user will be informed and requested to validate or overwrite his competitors from the neighbours' list display cf Market definition workbench. The user is able to sort out the neighbours display lists with to the followings criteria:

Geographical location of the hotel neighbours, for example 10 km (6.25 miles), which is a value defined at hotel level.

The hotel chain code(s) requested - if any.

The hotel category(ies) (number of stars)

The neighbours/competitors list is saved in the database. The search query will return the result in real-time. From the global exhaustive list of neighbouring properties, the user can further refine the selection and associate specific weights to each competitor retained. The weight varies from 1 to 3 and this value will impact the market price value.
The user defines the room types and rates for which he wants to have competitive information.
The hotels extracted from different interfaces will be merged in the trend and tendency calculation. The trend is calculated for the whole market set. The display will hold indication of the data source for each hotel.

Availability Query

To build availability requests, the hotel profile and hotel competitors need to be set up before. The automatic process is triggered in daily basis to retrieve the availability information is obtained by running another command on the web services.
A semantic analysis calling for a label parsing process of room rates and of label types and an availability process are executed at the same time as the availability request in order to pick up the list of unrestricted rates containing the Best Available Rate character in the rate description field.

**Market Data Analyses module**

The objective of this module is to analyze the selected hotel data to compute a market price and a market trend and to assess the overall market stability.
Market price: the market price is the weighted average of the prices of the hotels from the short list. The weights are those defined by the user in the workbench.
Market trend: the market trend is computed over a variable time period: past 7 days, 14 days or 28 days. It is calculated using a linear regression model between market price and time combined with a Meier smoothing algorithm in order to improve the correlation between the two variables. A maximum and a minimum market trends are also determined over the selected time period.
Market stability: when the correlation falls below a given threshold, the market is flagged as unstable.
The new price recommendation display includes the new dynamic pricing functionality based on the imported data eventually completed by other rate shopping data. The values of the Best Availability Rate (BAR) influenced by the market price can be overwritten by any value entered by the user. Usually hotels sell at a rate which fluctuates according to their demand forecast. The rate can take on different values which are known as BAR levels. A typical hotel chain may have 10 to 20 such levels in a season. The revenue management system may recommend moving art or down the price great using these levels.
The market pricing module computes and delivers the following information:

Market Share

The hotel market share is the number of rooms of the hotel as a percentage of the rooms in the hotel's competitive market set. The market set is the total number of rooms the hotel is in direct competition with, within its area's market and/or segment.

*Example:*

My hotel (100 rooms) divided by Total Market Set (1,000) equals the Market Share of 10%

Market Price

It represents an average price for all the competitors set defined by the user and for the entire horizon (current date +365 das).

$$\text{Market Price (Day D)} = \sum \text{competitors (i) price for D* weight (i)} / \sum \text{(weight)}$$

* number of competitors.

*Example:*

***Table 1: Average market price (future dates)***

| occupation date/hotel | weight | 01-Aug-10 | 02-Aug-10 | 03-Aug-10 | 04-Aug-10 |
|---|---|---|---|---|---|
| Hotel A | 1 | 124 | 128 | 128 | 129 |
| Hotel B | 1 | 123 | 127 | 127 | 128 |
| Hotel C | 1 | 123 | 123 | 123 | 124 |

Market Tendency

If it is assumed that the market tendency follows a linear trend, the market trend is the tangent of the linear tendency or regression line y=at+b.
Where

$$a = covariance\ (T,y)/variance(t)\ ,\ -1 \leq a \leq 1.$$

$$Variance(T) = sum\ t2 - (average(T))^2/N$$

$$b = average(y) - a * average(T)$$

$$R^2 = (covariance\ (T,y))^2\ /variance\ (T) * variance(y).$$

The correlation coefficient $R^2$ measures the dependency between the market price and time slots. If the value is close to 0, it means there is no relationship between the two variables and in this case the market is not stable. In this case, if $R^2$ is equal or lower than a given Market stability coefficient - **MSC** (value defined at database level) - the market is unstable. No recommendations are then calculated and the market trend is flagged as *"unstable".*
By default a Meier smoothing method period 3 based on floating average concept will be applied in order to get a better correlation coefficient.

- Meier Smoothing Method

X= 1, 2, 3, 4, 5, 6 and 7

Y= 556, 580, 610, 640, 740, 845, 975

Then X1= 1+2+3+4/4= 2.5

Y1= 556+580+610+640/4= 596.5

X2= 5+6+7 / 3=6

Y2= 740+845+975/3 =853.33

Meier line regression becomes:

853.33= a* 6+ b

-596.50=a*2.5+b

=256.83=a*3.5 >a= 73.38 (256.83/3.5) b=596.6-(2.5-73.38) . Y= 73.38*X+413.15

<u>Market Trend</u>

The Market trend indicator is based on the market tendency describing the market price evolution for 7 days, 14 days or 28 days before current day. The trend used in the batch is displayed by default.

The trend is calculated for the following periods: 7 days, 14 days and 28 days. The above trends are defined at the database level for all hotels. Two methods exist to calculate the market trend. The first one is based on the regression line and market tendency and the second will use the difference in terms of price between the first day of the trend and the last one.

- Tendency Method

**Market trend %=**a (tangent of the line y=at+b) *100 /price (of the day).

Example: Occupation date 01 /08/2010, current date 01/06/2010, short term trend D-7 and competitors set containing 3 hotels.

The regression line uses the 7 days trend average market price calculated day by day for the 3 hotels to determine tangent line and deduce the trend of the occupation day.

***<u>Table 2: Trend calculation for occupation day 01/08/20101(Short term trend -7 days)</u>***

| | 26-May | 27-May | 28-May | 29-May | 30-May | 31-May | 1-Jun |
|---|---|---|---|---|---|---|---|
| Hotel A | 121 | 122 | 122 | 124 | 124 | 125 | 124 |
| Hotel B | 124 | 121 | 121 | 123 | 124 | 124 | 123 |
| Hotel C | 123 | 123 | 124 | 124 | 123 | 124 | 123 |
| Average market price 7 days trend | 123 | 122 | 122 | 124 | 124 | 124 | 123 |

Figure 5 shows a graphic representation of the example above.

The average market price of the occupation date calculated by the above formula (Market price) is equal to **123** Euros. The market tangent calculated by the tendency formula is equal to 0.2857. The market trend for the $1^{st}$ august 2010 is equal to:

((0.2857/123)*100)*nbr of day of the trend (7 days) = **1.62%.**

The same approach is used to calculate the market trend over 14 days or 28 days.

- Delta Method

The trend in this method represents the difference (percentage) between the market price for the last day and the price of the market for the first day of the trend:

Market trend % (7-day trend) = (Price (day7)-Price (day1)/Price (Day 7))*100

In this example given before:
In the above example: trend (26-May) =123, trend (1-Jun) =123
Market trend % (7-day trend)=(123-123/123)*100=0%.

- Minimum and Maximum Market Trends

Example: Occupation date 01/08/2010, current date 01/06/2010 and short term trend D-7. For competitors set containing 3 hotels: Hotel A, Hotel B and Hotel C. The price evolution for 7 previous days is given in Table 3.

***Table 3: Competitors price evolution for occupation day 01/08/2010***

| 7 day trend/ competitor set | 26-May | 27-May | 28-May | 29-May | 30-May | 31-May | 1-Jun | -> | 1-Aug |
|---|---|---|---|---|---|---|---|---|---|
| Hotel A | 121 | 122 | 122 | 124 | 124 | 125 | 124 | | 124 |
| Hotel B | 124 | 121 | 121 | 123 | 124 | 124 | 123 | | 123 |
| Hotel C | 123 | 123 | 124 | 124 | 123 | 124 | 123 | | 123 |
| Market price | 123 | 122 | 122 | 124 | 124 | 124 | 123 | | 123 |
| my hotel price | 117 | 118 | 119 | 118 | 119 | 120 | 121 | | 121 |

For each competitor the regression line (tendency curve) is calculated based on the trend selected by the user (combo box market trend) and the following formula:

Trend %= (tangent/occupation day price)*100

The minimum and maximum trends are determined according to the above formula. In this example the min & max trend are:

**Hotel A trend %** = (0.6/124)*100* 7 =3.38% (max trend)

**Hotel B trend %** = (0.21/123)*100* days trend =1.95%

**Hotel C trend %**= (0.03/123)*100* days trend day =0.17% (min trend)

**Market trend % = (**0.28/123)*100* days trend =1.59%

**My hotel trend** %= (0.57/121)* days trend =3.29%

Figure 6 shows the Competitors, the Market and the "My Hotel" trend according to the present example.
An example of calculation is given in Table 4 for 30 days (occupation dates).

***Table 4: Min& Max Market Trend Calculation.***

| | 1-Au g | 2-Aug | 3-Aug | 4-Aug | 5-Aug | 6-Aug | 7-Aug | 8-Aug | 9-Aug | | 31-Aug |
|---|---|---|---|---|---|---|---|---|---|---|---|
| market trend % | 1,59 | 1,17 | 1,22 | 1,27 | 1,32 | 1,37 | 1,42 | 1,62 | 0,05 | | 1,15 |
| maximum market trend % | 3,38 | 1,42 | 1,47 | 1,52 | 1,57 | 1,62 | 1,67 | 1,87 | 3 | | 4 |
| minimum market trend % | 0,17 | 1,17 | 1,22 | 1,27 | 1,32 | 1,37 | 1,42 | 1,62 | 0,05 | | 1,15 |
| My hotel trend % | 3,29 | 1,29 | 1,3 | 1,31 | 1,32 | 1,33 | 1,34 | 1,35 | 1,36 | | 1,58 |

**Market Influence module**

This module relies on the market analyses described above to influence the hotel pricing. This is done by defining market impact rules. A market impact rule is a recommendation to increase or to decrease a rate level based on:

- The comparison of the market price with the hotel current rates;
- The comparison of the hotel current rates with some predesignated hotel competitors;
- The hotel strategy, which is either:

  ■ A follower strategy, in which case market price variations will also tend to apply to the hotel,

  ■ Or a leader strategy, where the hotel will be less sensitive to such market variations,

- The Market trend, when the trend has not been flagged as unstable.

The outcome of this module is a new price recommendation which is then sent to the distribution channels in real time.

Strategy

It contains one of the 2 items leader or follower defined at hotel level (def_hotel) in the Hotel screen.

- **Follower strategy**: In this strategy the hotelier considers that he has a similar product and price than competitors. In this case, he follows the market price variation by applying the same market fluctuation ratio.
- **Leader strategy:** The market leader dominates its competitors in term of: customer loyalty, distribution, segment of client, product quality and sales revenues. In this case, the hotelier is less sensitive to market price variation

Market Reactivity

The user defines an upper and a lower band which will serve as boundaries to detect if the market is flat (when the trend remains within these boundaries) or whether the market is growing (when the trend goes beyond the upper bound) or declining (below the lower bound).

Hotel BAR driven by market trend

This new functionality allows the hotelier to be more market oriented by adapting his pricing strategies regarding the market variations. The different parameters such as competitor's price, market price stability/consistency, and strategy chosen by the hotel (leader or follower) can be mixed in order to provide a framework to facilitate pricing decisions. The former parameters can be combined to provide the user with several scenarios .At the end, the best trade off is applied. The leader or follower strategy is applied at hotel level.

Market price vs. My Hotel BAR (in term of bar level):

The market price calculated above (average price of all the competitors per day) is compared to the hotel BAR to determine the position of the hotel price versus the market price. For example if the market price of the day is 123 Euros and my current BAR calculated by the system is 90 euro, it means the market price is 2 levels greater than the current hotel BAR (++).

Market Impact Rules

The traditional price recommendations (usually expressed as a BAR level) resulting from the revenue management optimization are then influenced by the market analyses described above.

This influence is materialized by a set of business rules which rely on the following criteria:

- The comparison of the market price with My Hotel current price,
- The comparison of my direct competitors prices with My Hotel current price,
- The market trend; the market is considered flat (=) when the market trend of the day is moving within a range included between boundaries which are predetermined by hotel and by time leads (7 days, 14 days, 28 days),
- The price strategy,
- The weight given to each competitor.

The business rules take the form of a multi-criteria analysis yielding a score for each of the above criteria. If the score is positive, the outcome will be a recommendation to increase current price by one or two BAR levels. A maximum of two is set for the level increase to avoid too extreme price fluctuations. Likewise, if the score is negative, the outcome will be a recommendation to decrease by one or two BAR levels.

The details of the following paragraphs are given, as a specific example, with reference of the platform Architecture and user interface. However those skilled in the art will appreciate that similar functions could be implemented with other systems or applied to other industries (e.g. airlines, car rental, camping), provided the necessary adaptations to user interface and market information are realised.

Hotel Profile Screen

This screen is located in the menu
(Administration/configuration/parameters). It allows user to create profile for hosted hotels in RMS using market pricing tool (see Figure 7). The user must be able to create, modify and delete his hotel profile. The user must have the appropriate access right to be authorized to manage the allowed hotels. Each Profile has a validity period. The profile could be duplicated to several hotels belonging to the same sub-cluster When end date is lower than today date; The Validate column will be switched to NO value. The hotel profile should be the same for all hotels and set with the following values: length of stay (LOS)=1 day, number of guests =1 and Horizon=365 days. The hotel profile is saved on common_ marketpricing database figure 5. The hotel profile will be used for the daily treatment when the system starts downloading the rate availability for the hotel in question and its respective competitors.

Hotel Competitors Screen

The rate and room type screen (Figure 8) is displayed by drilling into the **Hotel competitors Screen**. The list of rates contains all the unrestricted best available rates imported from the web service by using syntaxes analysis and rates coming from the *get_rates* or *get_rate_by_profile* services provided by other providers. This setting is made each time a new hotel enters the hotel list.

Pop up rate code /room type (see Figure 9)

- The user selects room type and rate coming from availability request and matching with Limited or extended filter .By default the data is displayed for a limited filter.
- The user must map each (rate, room type) of the competition to his room class (one to one selection).
- The cancel button allows the user to go back to his previous selection,
- All rate codes or room types are selected when the "All" check box is ticked and vice versa

- The search type combo box contains 2 items:
- Limited: for limited BAR label description available the including and excluding BAR label description tables
- Extended: for all available hotel rates. The BAR rate are included
- The user can extend /add new customized labels to be integrated in the words library of the label parsing process by using Administration/parameters/ customized BAR label screen. The labels are defined at database level.

Hotel New Parameter Screen

The new hotel definition screen (shown in Figure 10) integrates the settings for the Market pricing module:

- Use_market_pricing: Boolean true (market pricing enabled for the hotel) or false(market pricing disabled for the hotel),
- The hotel Strategy: Leader or Follower,
- Market reactivity upper band and market reactivity lower band: These 2 parameters allow the hotelier to define acceptable trend threshold.
- Search radius in km or mile, this will allow us to retrieve the list of hotel neighbors located inside the radius around the user hotel.
- Master room class: master room is defined for each hotel. This room class is used in market pricing rules to generate a BAR coming from these rules.

Customized BAR Label Screen

This screen (see Figure 11) allows user to display the BAR label used in label parsing process (label not updatable). The user can add new labels and modify and delete those created by himself. The key words are added in the including table

The user has the ability also to exclude (rate, room type) from his (rate, room type) competition set selection exp: *promotion BAR rate.* In this case, the *promotion* key word is added to excluding table and combined with key words belonging in the including BAR key words table described above.

Market Price Recommendation Screen

This screen (Figure 12) allows user to display the BAR label used in label parsing process (label not updatable). The user can add new labels and modify and delete those created by himself. The market impact information is displayed only when the user click on the button (the strategy field, the market reactivity field, the next & previous button, market price and market trend).

N-Day Historical Average Price

This graph (as represented in Figure 13) allows user to display the average price over a past period of N days (N=30 in the example below), for any specific occupation day D together with the hotel BAR and the average market price calculated for the competitors set.

Market Trend Homogeneity

This graph (represented in Figure 14) displays comparisons of the hotel against market trends for the next N days (here, N=30). The hotel's position is shown in comparison to the high and low trends forecast. It allows the user to understand the homogeneity of the market in terms of price consistency and market trend ranges (min/max trend).
The values are calculated taking into account the time span (7 days, 14 days or 28 days) entered by the user in the combo box.
By default in this chart the 30th next days starting from the first day selected by the user in the LOS screen are displayed. By clicking on the next and the previous, the user is able to display the trend 30 days per 30 days.

The dates where the system is considered as unstable ($R2 < MSC$) are indicated by red bars in the histogram (however, there are none in the above example).

Market Pricing Rules

The rules are stored in the table MP_RULES_BAR and valid for the entire cluster (see example in Figure 15). The **Market pricing rules BAR** screen is available under Administration/parameters/Market pricing menu.

**Functional controls:**

-The screen above enables the user to update only recommended BAR column by clicking on Modify button.
+1: increase by 1 level the current hotel BAR,
+2: increase by 2 levels the current hotel BAR,
-1: decrease by 1 level the current hotel BAR,
-2: decrease by 2 levels the current hotel BAR,
=: The current hotel BAR is recommended (no changes)
-Cancel button: cancels the previous modifications.

Market Pricing summary

This report (as shown in Figure 16) is displayed under Control menu. It allows user to display directly the list of hotels where the difference exists between Bar recommended by market pricing tool and current system BAR .That difference is displayed in term of variance in percentage or level of BAR. The detail of the changes is displayed for several periods: tomorrow, D+7, D+30 and D+327.
The screen gives the ability to click on the line (hotel) where the changes are reported and drill into LOS screen to validate, accept and upload the recommendations. Only the dates in difference will be displayed. When the user clicks on the column (specific date), the date selected will be displayed the middle of 7 days period (3 days before and 3 days after selected date).
The user can display the other dates by clicking on the button next
The number of changes displayed in the column D+7 includes the changes for tomorrow.
Idem, the changes of D+30 includes the changes reported for D+7 and tomorrow... etc

Availability request supervision Screen

This supervision query allows administrator and the user to oversee the execution of request availability (screen shown in Figure 17). The lifecycle information of the requests is stored in *RS_REQUEST* table. There are 4 statuses available:

Status 0: Pending requests - The Orange color will be displayed
Status 1: Ongoing requests - The Yellow color will be displayed
Status 2: Processed requests - The Green color will be displayed
Status 3: Failing requests - The Red color will be displayed

The method described above is also represented in the diagram shown in figure 18. The following example will use the case of hotel rooms booking. Those skilled in the art will easily appreciate that the method according to the present invention could be used equally well in several different circumstances and field, where a limited number of resources is available over period of time. Possible alternative resources include, just to make some examples: sport structures, seats on public transports, seats for shows or sport events, slots with service providers (e.g. hospital services or specialist visits). In general the method according to the present invention can be applied to any resource management system where the resources are "perishable", i.e. they are "wasted" if not allocated and used before predetermined time thresholds. The method begins at black circle 1801 and then goes to 1803 where the Market Workbench is defined. Such definition can be performed with pre-defined parameters (using e.g. a semantic text search algorithm) or by prompting the user to indicate or customise his own parameters. The results of this activity could be then reviewed and possibly modified (even in a recursive manner) in order to identify an optimal definition, with the intervention of the user or by means of specific tuning software tools. For "User", in the present example, it is meant a Hotel (or someone acting for the Hotel, e.g. a travel agency), but as mentioned above, other kind of user or markets could benefit from a method and system as described in the present example. At step 1805 the system acquires information on available market databases. This step is also called rate shopping and can be done in several different ways, as explained above: in a preferred embodiment of the present invention the data are acquired from an appropriate data base. At step 1807 the system obtains the User's characteristics (e.g. from a repository) so that the estimate of market price (see box 1809) can be tailored to the specific User's characteristics. A key feature of the method and system of a preferred embodiment of the present invention is the modification of "average market price" according to so called "market influencers". These market influencers are sort of weights which are specific for the User and which might bring to unexpected recommended prices, depending on several factors, e.g. geographic position of the hotel, popularity of hotel brand, category of hotel.

If one or more of these market influencers are available (step 1811), the system adjusts the estimated market price (step 1813) and provides the results of the market analysis to the User. As detailed above the representation of the results can be implemented in several different ways, but generally this involves the display of tables on a computer monitor by means of an interactive user interface. The process here described can have many alterations and modifications; also it is possible that the starting conditions are modified by the user or by change in conditions and/or in time: just as an example, the approaching of the date for which room availability is requested can have an influence on the recommended price.

It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the disclosure may be incorporated in any other embodiment as a general matter of design choice.

Similar considerations apply if the program (which may be used to implement each embodiment of the disclosure) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibres, wireless connections, networks, broadcast waves, and the like; for example, the medium may be of the electronic, magnetic, optical, electromagnetic, infrared, or semiconductor type.

In any case, the solution according to the present disclosure lends itself to be carried out with a hardware structure (for example, integrated in a chip of semiconductor material), or with a combination of software and hardware.

## Claims

1. A revenue management method for maximizing, through a client-server data processing system, the exploitation on a predetermined time interval of a plurality of perishable service resources by a first provider of service resources, each resource of the plurality of perishable service resources being classified according to a plurality of criteria and having an expected offer price, the data processing system having access to a data base containing information on price of service resources offered by a plurality of competitor providers of service resources, the method including the steps of:

   - obtaining from a repository information on service resources of the first provider according to the plurality of criteria;
   - selecting a set of providers of the plurality of competitor providers, offering service resources having a score indicative of the similarity of the resource with the resources of the first provider, the similarity being based on at least one of the plurality of criteria;
   - enquiring the data base for obtaining information on price of service resources of selected providers;
   - estimating an average price of selected resources for the predetermined time interval;
   - adjusting the expected offer price according to the estimated average price and a set of predetermined market influencer parameters.

2. The method of claim 1 wherein the score is determined comparing one or more of the following criteria: resource category, geographic position, resource characteristics, price range.

3. The method of any preceding claim wherein the market influencer parameters include values indicative of one or more of the following characteristics of the first provider: geographic position, popularity of brand, category.

4. The method of any preceding claim wherein the market influencer parameters include values indicative of one or more of the following factors: period of year of the predetermined time interval; length of the predetermined time interval, time difference from the start of the predetermined time interval.

**5.** The method of any preceding claim further including the step of

- adjusting the estimated average with a weight indicative of the expected market trend.

**6.** The method of claim 5 wherein the weight is calculated applying a correlation coefficient obtained by applying a Mayer Smoothing Method.

**7.** The method of any preceding claim wherein the average price is estimated according to the public prices of service resources of selected providers.

**8.** The method of any preceding claim wherein the service resources are hotel rooms and the service providers are hotels.

**9.** A computer program comprising instructions for carrying out the steps of the method according to any preceding claim, when said computer program is executed on a computer.

**10.** A computer program product including computer readable means embodying the computer program of claim 9.

**11.** A data processing system for maximizing the exploitation on a predetermined time interval of a plurality of perishable service resources by a first provider of service resources, each resource of the plurality of perishable service resources being classified according to a plurality of criteria and having an expected offer price, the data processing system having access to a data base containing information on price of service resources offered by a plurality of competitor providers of service resources, wherein the system comprises one or more components adapted to perform the method of any claim 1 to 8.

**12.** A service deployed in a data processing system for implementing the method of any claim 1 to 8.

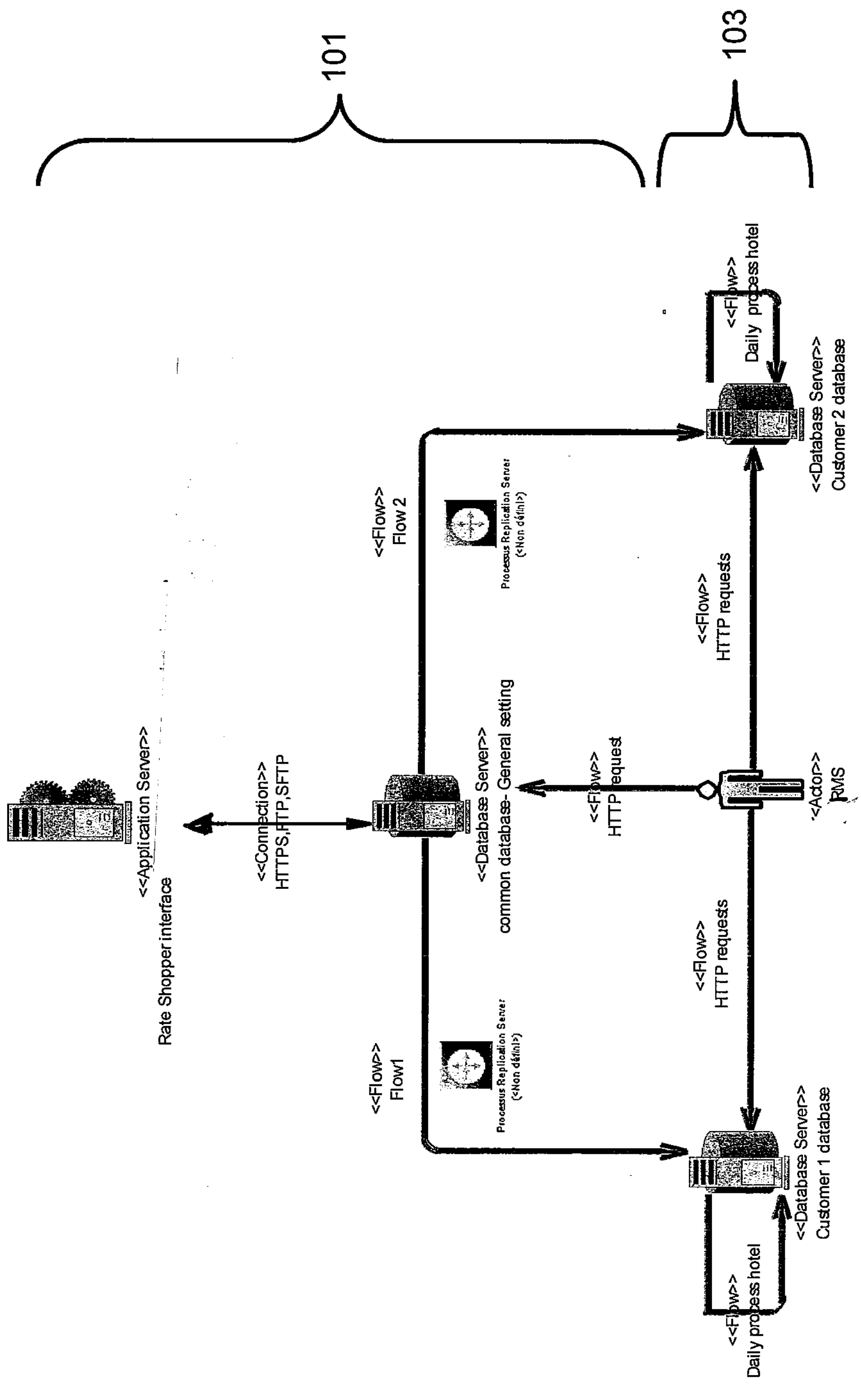
101
103
<<Application Server>>
Rate Shopper interface
<<Connection>>
HTTPS,FTP,SFTP
<<Database Server>>
common database- General setting
<<Flow>>
Flow1
<<Flow>>
Flow 2
Processus Replication Server
(<Non défini>)
Processus Replication Server
(<Non défini>)
<<Flow>>
HTTP request
<<Actor>>
RMS
<<Flow>>
HTTP requests
<<Flow>>
HTTP requests
<<Database Server>>
Customer 1 database
<<Database Server>>
Customer 2 database
<<Flow>>
Daily process hotel
<<Flow>>
Daily process hotel

Fig. 1

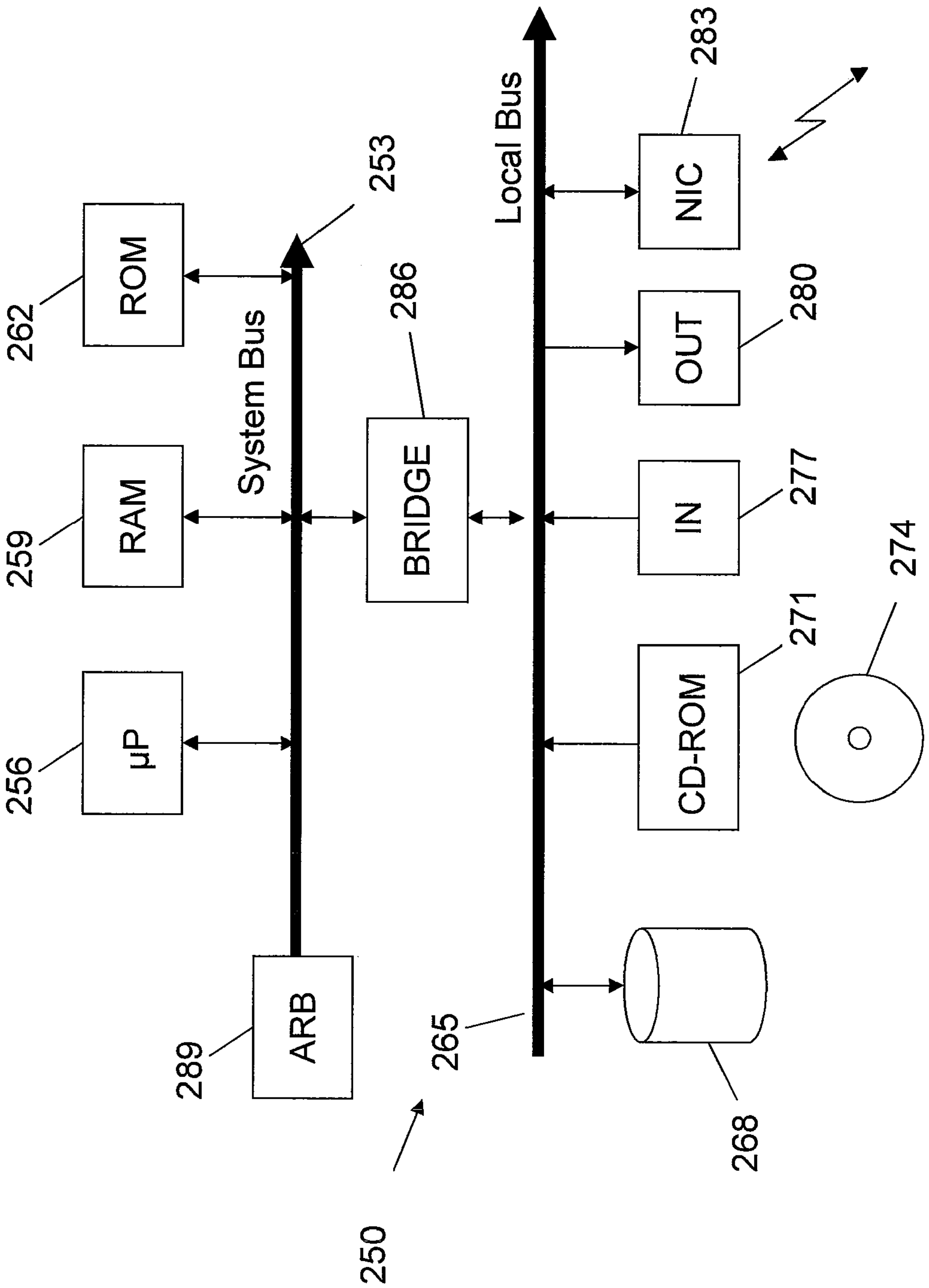
262
ROM
259
RAM
256
µP
253
System Bus
286
BRIDGE
289
ARB
265
250
Local Bus
283
NIC
280
OUT
277
IN
271
CD-ROM
274
268

Fig. 2

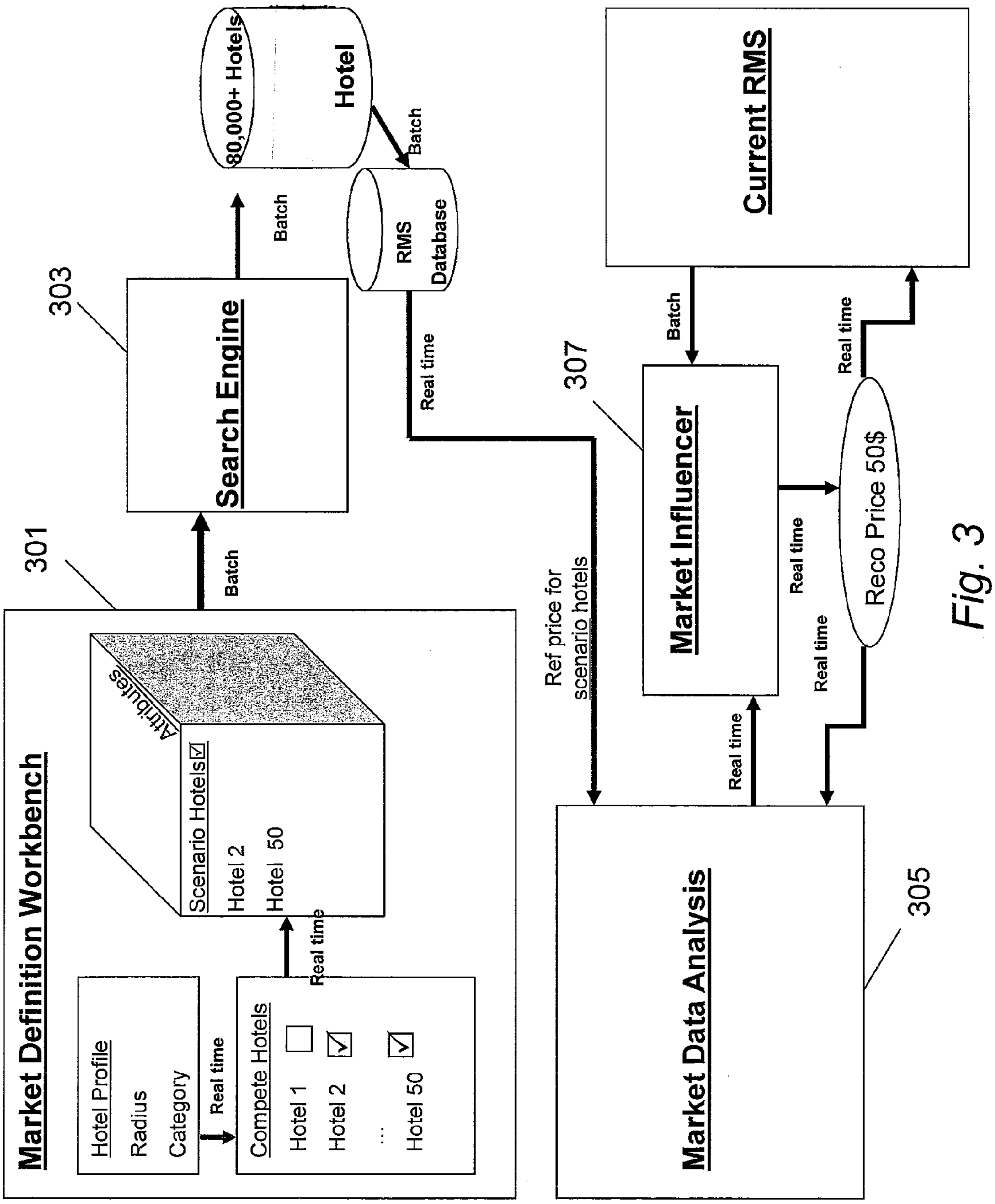
Market Definition Workbench
Hotel Profile
Radius
Category
Real time
Compete Hotels
Hotel 1
Hotel 2
...
Hotel 50
Real time
Scenario Hotels
Hotel 2
Hotel 50
Attributes
301
Batch
Search Engine
303
Batch
80,000+ Hotels
Hotel
Batch
RMS Database
Real time
Ref price for scenario hotels
Market Data Analysis
305
Real time
Market Influencer
307
Batch
Current RMS
Real time
Reco Price 50$
Real time
Real time

Fig. 3

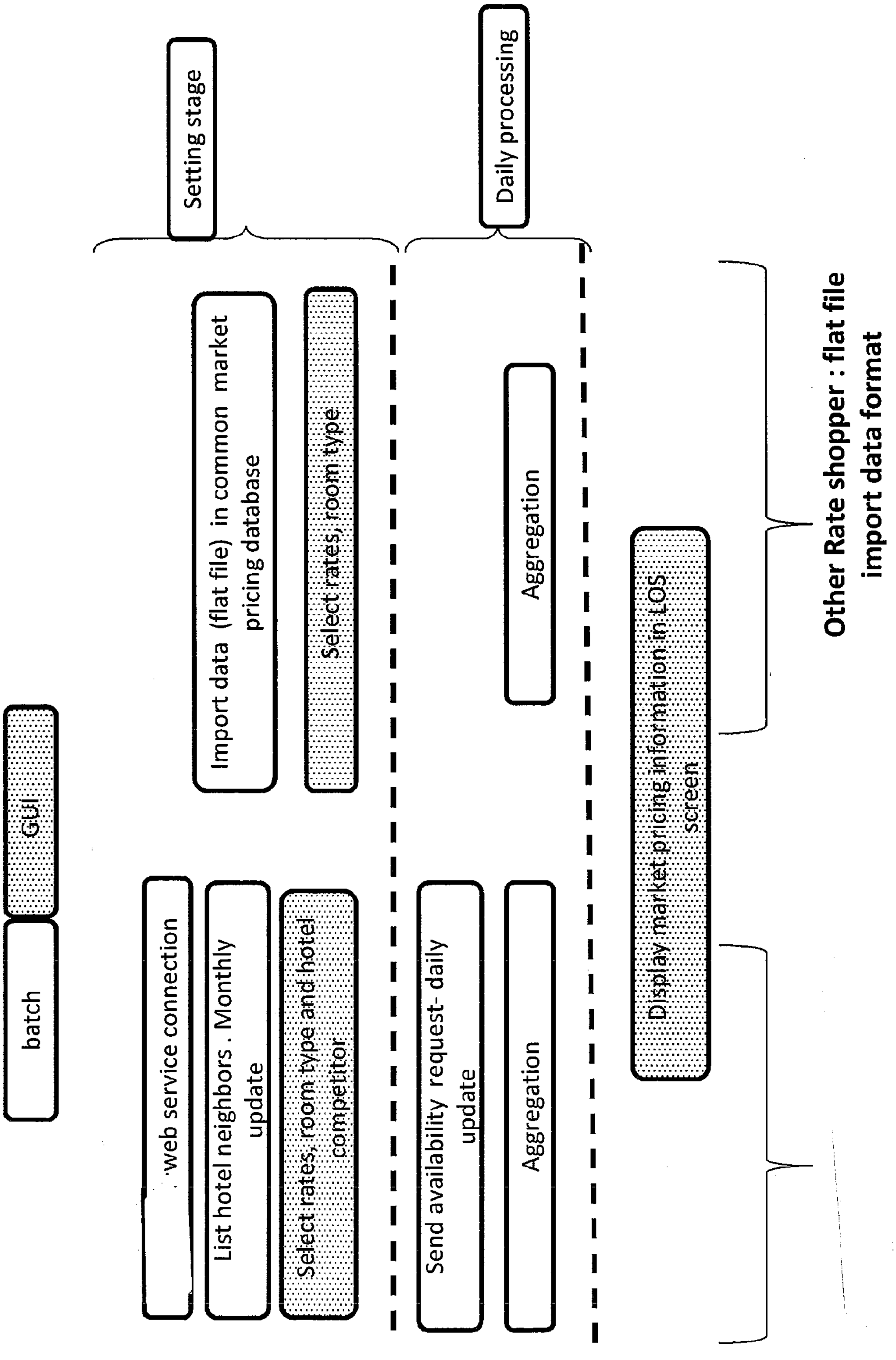
batch
GUI
Setting stage
Daily processing
web service connection
List hotel neighbors . Monthly update
Select rates, room type and hotel competitor
Send availability request- daily update
Aggregation
Import data (flat file) in common market pricing database
Select rates, room type
Aggregation
Display market pricing information in LOS screen
Other Rate shopper : flat file import data format

*Fig. 4*

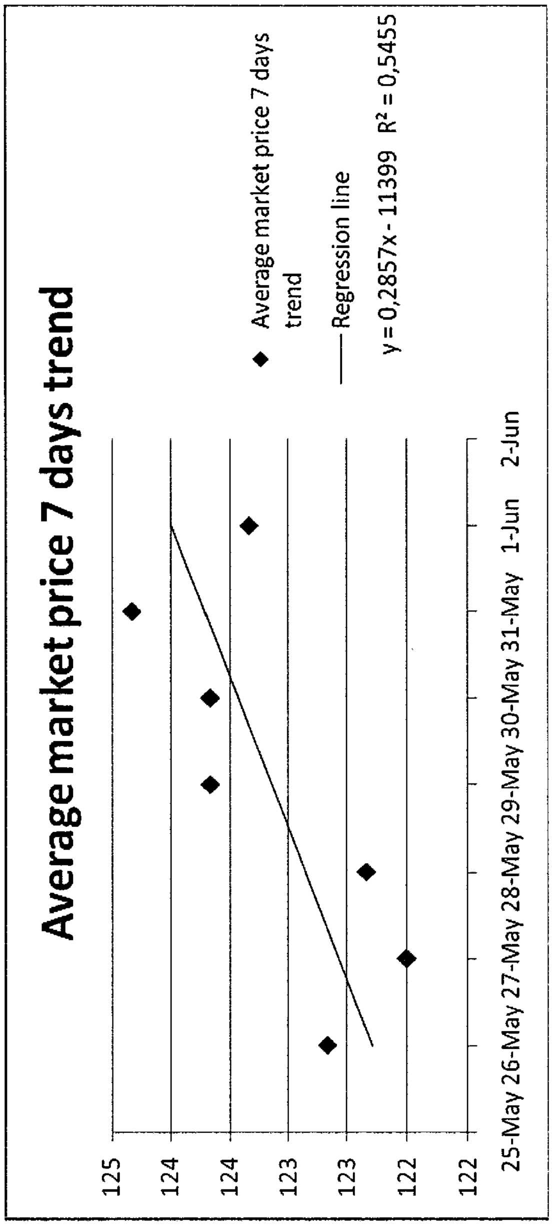
Average market price 7 days trend
125
124
124
123
123
122
122
25-May 26-May 27-May 28-May 29-May 30-May 31-May 1-Jun 2-Jun
Average market price 7 days trend
Regression line
y = 0,2857x - 11399 R² = 0,5455

Fig. 5

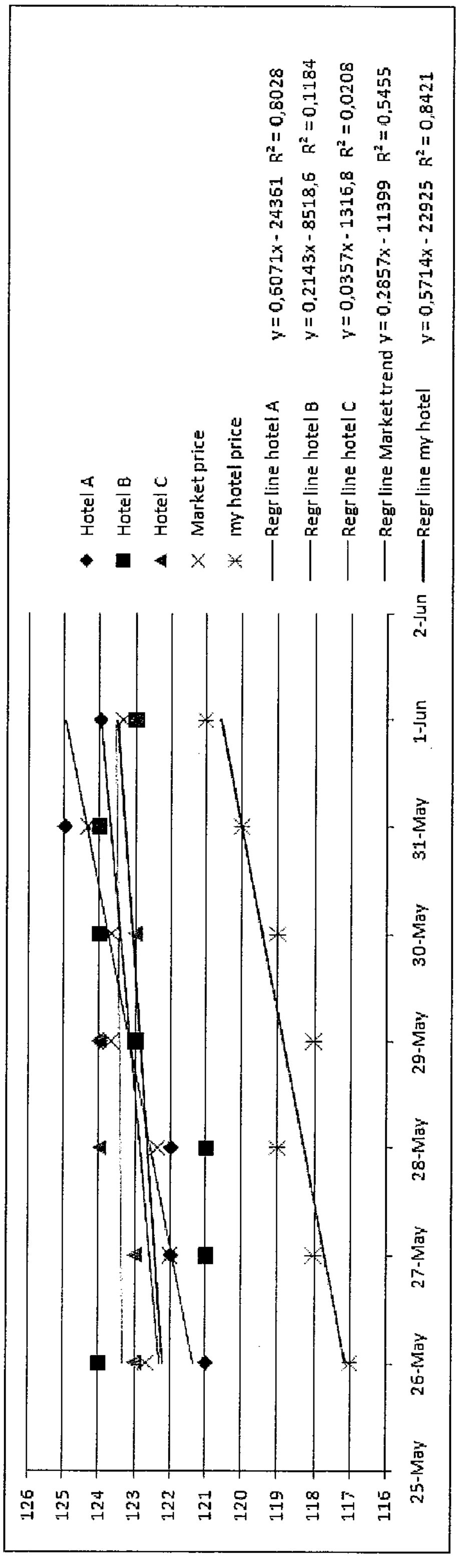
126
125
124
123
122
121
120
119
118
117
116
25-May
26-May
27-May
28-May
29-May
30-May
31-May
1-Jun
2-Jun
Hotel A
Hotel B
Hotel C
Market price
my hotel price
Regr line hotel A y = 0,6071x - 24361 R² = 0,8028
Regr line hotel B y = 0,2143x - 8518,6 R² = 0,1184
Regr line hotel C y = 0,0357x - 1316,8 R² = 0,0208
Regr line Market trend y = 0,2857x - 11399 R² = 0,5455
Regr line my hotel y = 0,5714x - 22925 R² = 0,8421

*Fig. 6*

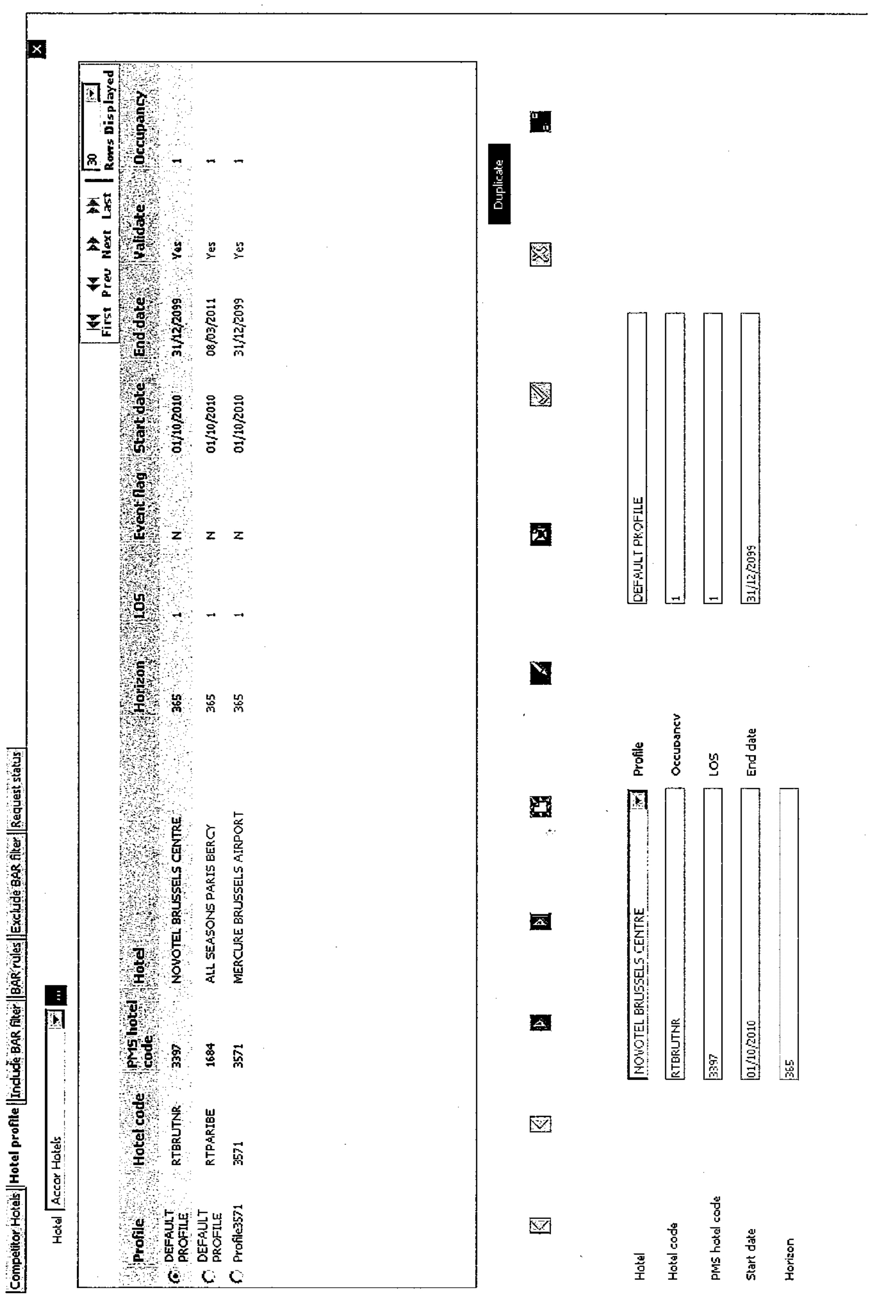
Competitor Hotels
Hotel profile
Include BAR filter
BAR rules
Exclude BAR filter
Request status
Hotel
Accor Hotels
First
Prev
Next
Last
30
Rows Displayed
Profile
Hotel code
PMS hotel code
Hotel
Horizon
LOS
Event flag
Start date
End date
Validate
Occupancy
DEFAULT PROFILE
RTBRUTNR
3397
NOVOTEL BRUSSELS CENTRE
365
1
N
01/10/2010
31/12/2099
Yes
1
DEFAULT PROFILE
RTPARIBE
1684
ALL SEASONS PARIS BERCY
365
1
N
01/10/2010
08/03/2011
Yes
1
Profile3571
3571
3571
MERCURE BRUSSELS AIRPORT
365
1
N
01/10/2010
31/12/2099
Yes
1
Duplicate
Hotel
NOVOTEL BRUSSELS CENTRE
Profile
DEFAULT PROFILE
Hotel code
RTBRUTNR
Occupancy
1
PMS hotel code
3397
LOS
1
Start date
01/10/2010
End date
31/12/2099
Horizon
365

Fig. 7

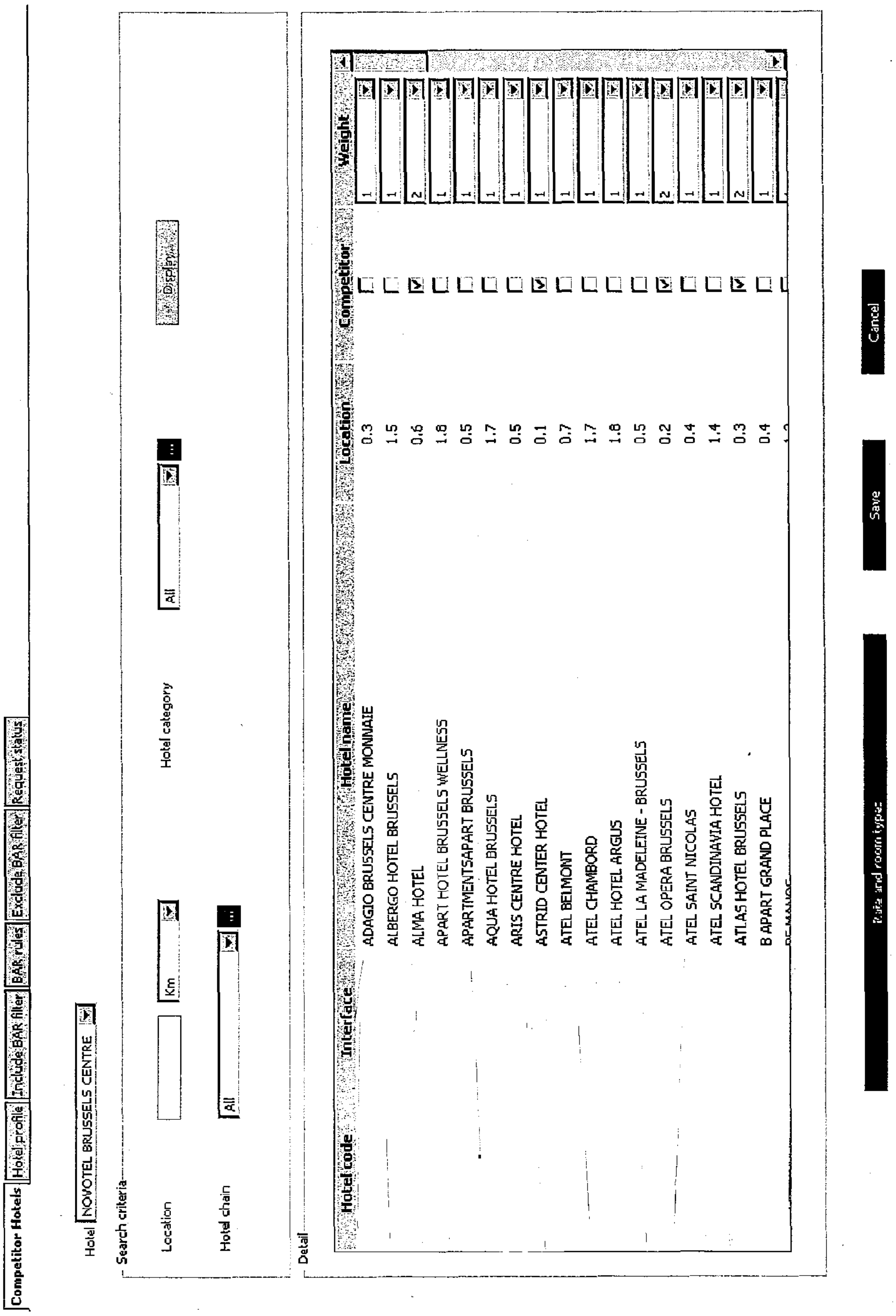
Competitor Hotels
Hotel profile
Include BAR filter
BAR rules
Exclude BAR filter
Request status
Hotel
NOVOTEL BRUSSELS CENTRE
Search criteria
Location
Km
Hotel category
All
Display
Hotel chain
All
Detail
Hotel code
Interface
Hotel name
Location
Competitor
Weight
ADAGIO BRUSSELS CENTRE MONNAIE 0.3 1
ALBERGO HOTEL BRUSSELS 1.5 1
ALMA HOTEL 0.6 2
APART HOTEL BRUSSELS WELLNESS 1.8 1
APARTMENTSAPART BRUSSELS 0.5 1
AQUA HOTEL BRUSSELS 1.7 1
ARIS CENTRE HOTEL 0.5 1
ASTRID CENTER HOTEL 0.1 1
ATEL BELMONT 0.7 1
ATEL CHAMBORD 1.7 1
ATEL HOTEL ARGUS 1.8 1
ATEL LA MADELEINE - BRUSSELS 0.5 1
ATEL OPERA BRUSSELS 0.2 2
ATEL SAINT NICOLAS 0.4 1
ATEL SCANDINAVIA HOTEL 1.4 1
ATLAS HOTEL BRUSSELS 0.3 2
B APART GRAND PLACE 0.4 1
Rate and room types
Save
Cancel

Fig. 8

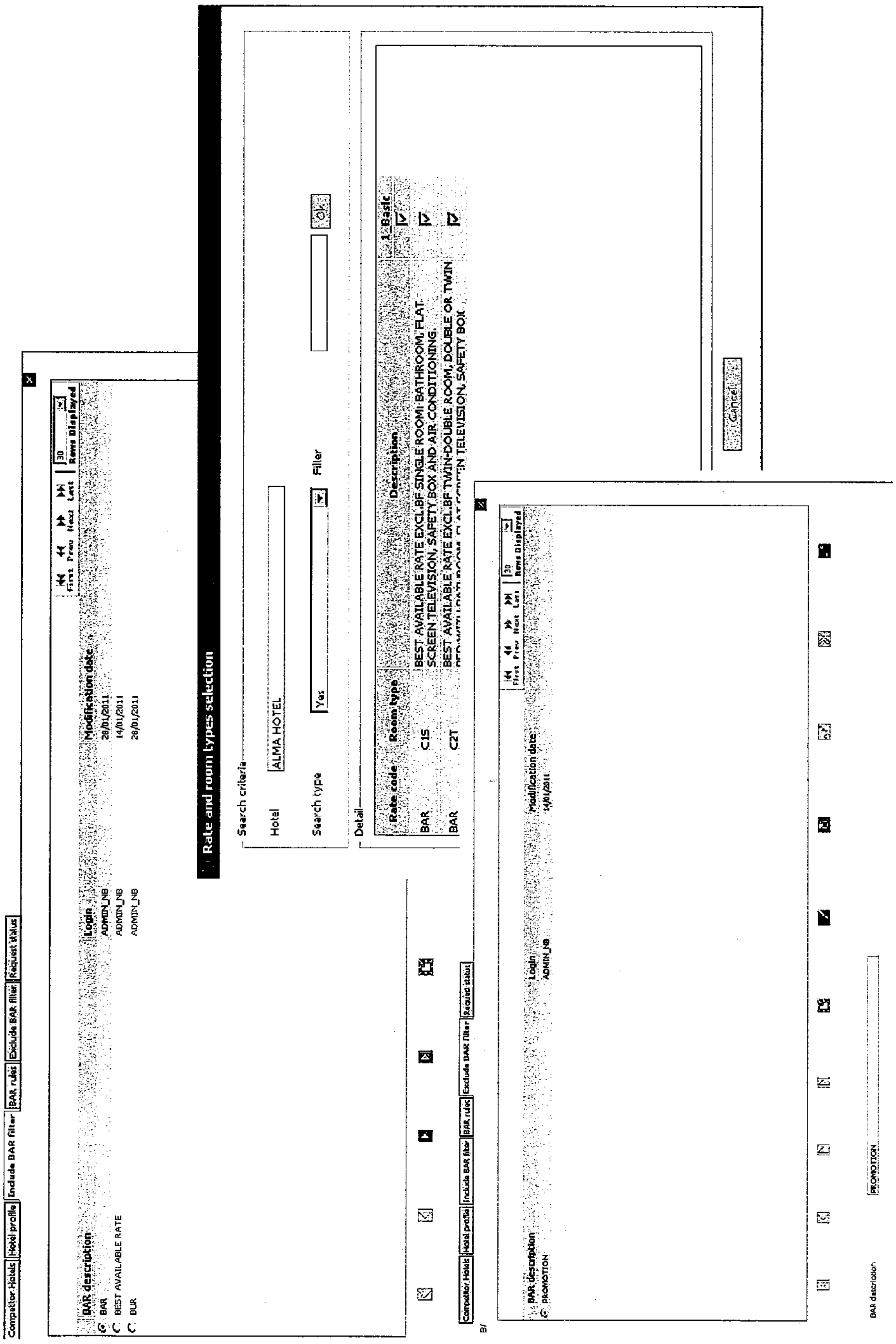
Rate and room types selection
Search criteria
Hotel
ALMA HOTEL
Search type
Yes
Filter
OK
Detail
Rate code
Room type
Description
1-Basic
BAR
C1S
BEST AVAILABLE RATE EXCL.BF SINGLE ROOM: BATHROOM, FLAT SCREEN TELEVISION, SAFETY BOX AND AIR CONDITIONING.
BAR
C2T
BEST AVAILABLE RATE EXCL.BF TWIN-DOUBLE ROOM, DOUBLE OR TWIN
Cancel
BAR description
Login
Modification date
BAR
BEST AVAILABLE RATE
BUR
PROMOTION
Competitor Hotels
Hotel profile
Include BAR filter
BAR rules
Exclude BAR filter
Request status

Fig. 9

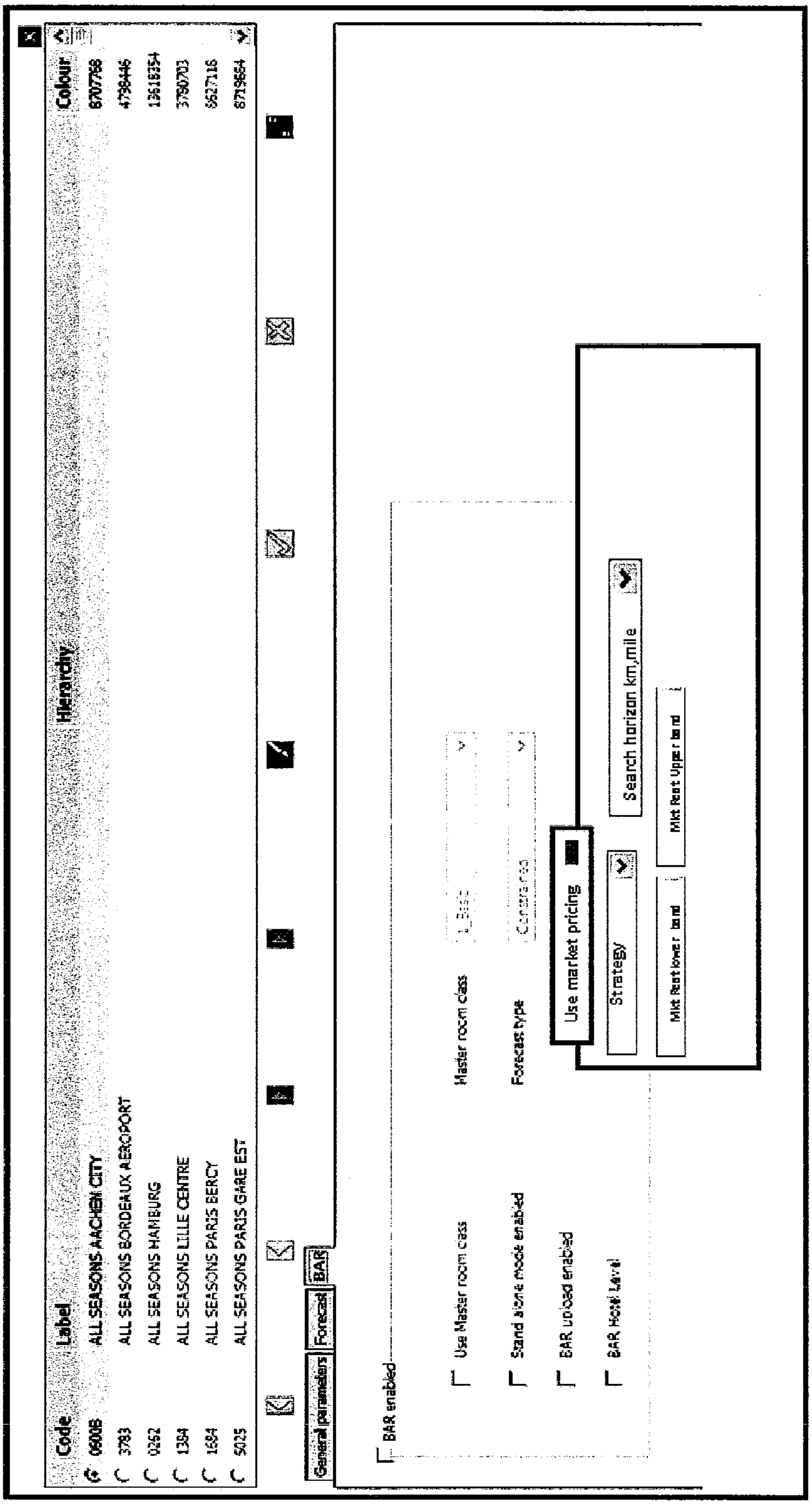
Code
Label
Hierarchy
Colour
0600B
ALL SEASONS AACHEN CITY
8707758
3783
ALL SEASONS BORDEAUX AEROPORT
4798446
0262
ALL SEASONS HAMBURG
13618354
1384
ALL SEASONS LILLE CENTRE
3790703
1684
ALL SEASONS PARIS BERCY
8627116
5025
ALL SEASONS PARIS GARE EST
8719654
General parameters
Forecast
BAR
BAR enabled
Use Master room class
Stand alone mode enabled
BAR unised enabled
BAR Hotel Level
Master room class
Forecast type
Use market pricing
Strategy
Search horizon km,mile
Mkt Rest lower band
Mkt Rest Upper band

Fig. 10

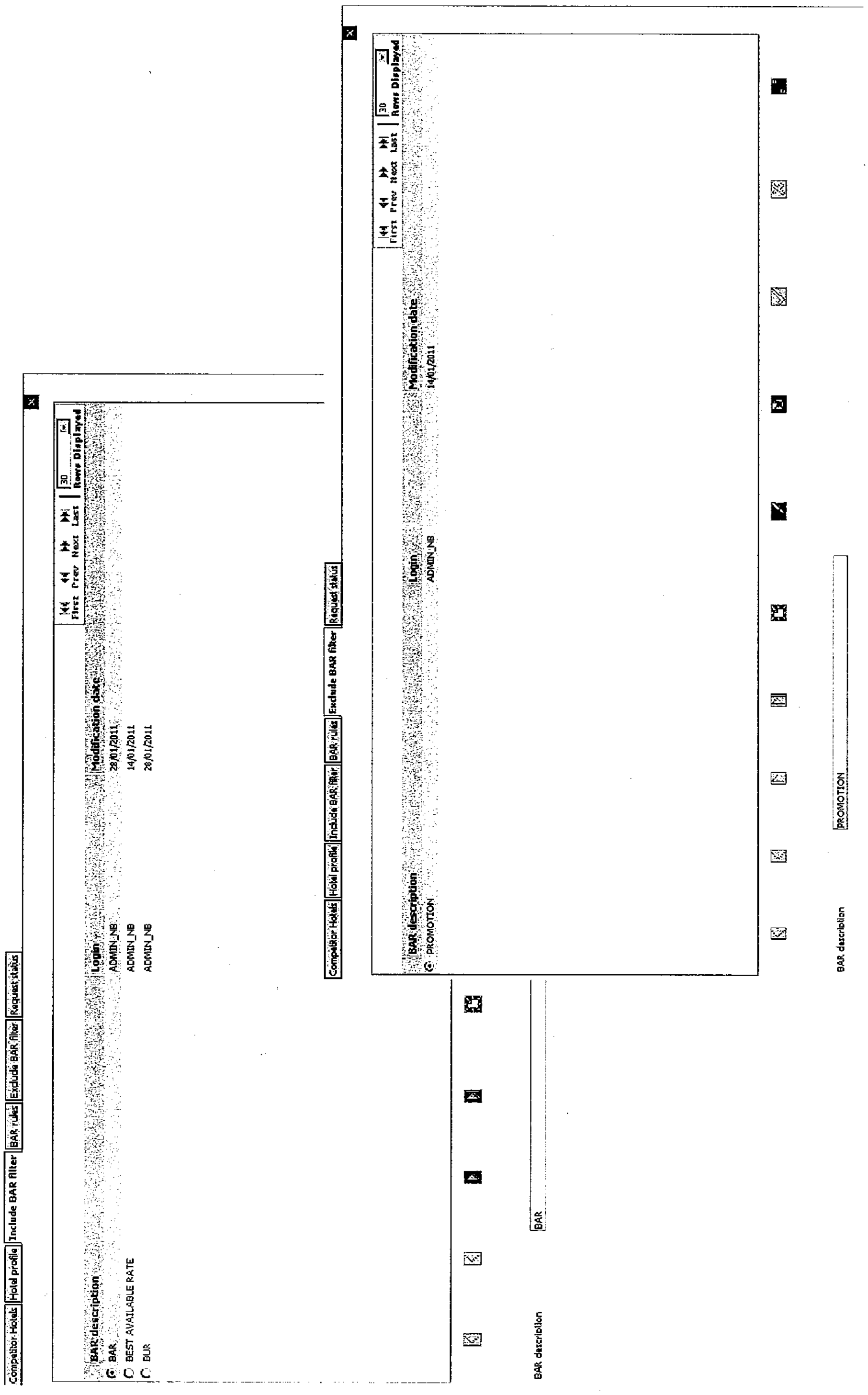
Competitor Hotels
Hotel profile
Include BAR filter
BAR rules
Exclude BAR filter
Request status
BAR description
Login
Modification date
First
Prev
Next
Last
30
Rows Displayed
BAR
ADMIN_NB
28/01/2011
BEST AVAILABLE RATE
ADMIN_NB
14/01/2011
BUR
ADMIN_NB
28/01/2011
BAR description
BAR
PROMOTION
ADMIN_NB
14/01/2011
BAR description
PROMOTION

Fig. 11

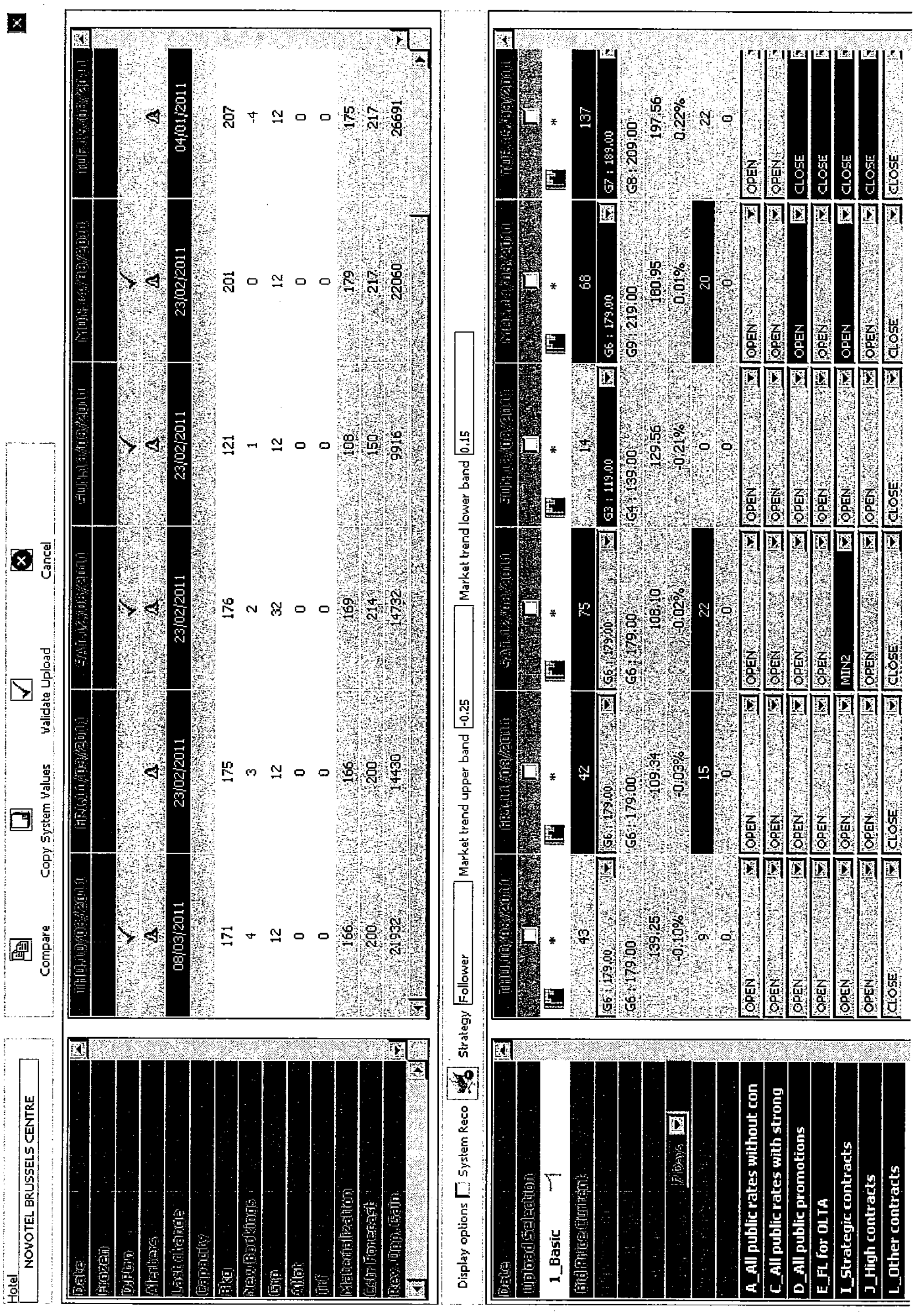
Hotel
NOVOTEL BRUSSELS CENTRE
Compare
Copy System Values
Validate Upload
Cancel
Display options
System Reco
Strategy
Follower
Market trend upper band
-0.25
Market trend lower band
0.15
1_Basic
A_All public rates without con
C_All public rates with strong
D_All public promotions
E_FL for OLTA
I_Strategic contracts
J_High contracts
L_Other contracts

Fig. 12

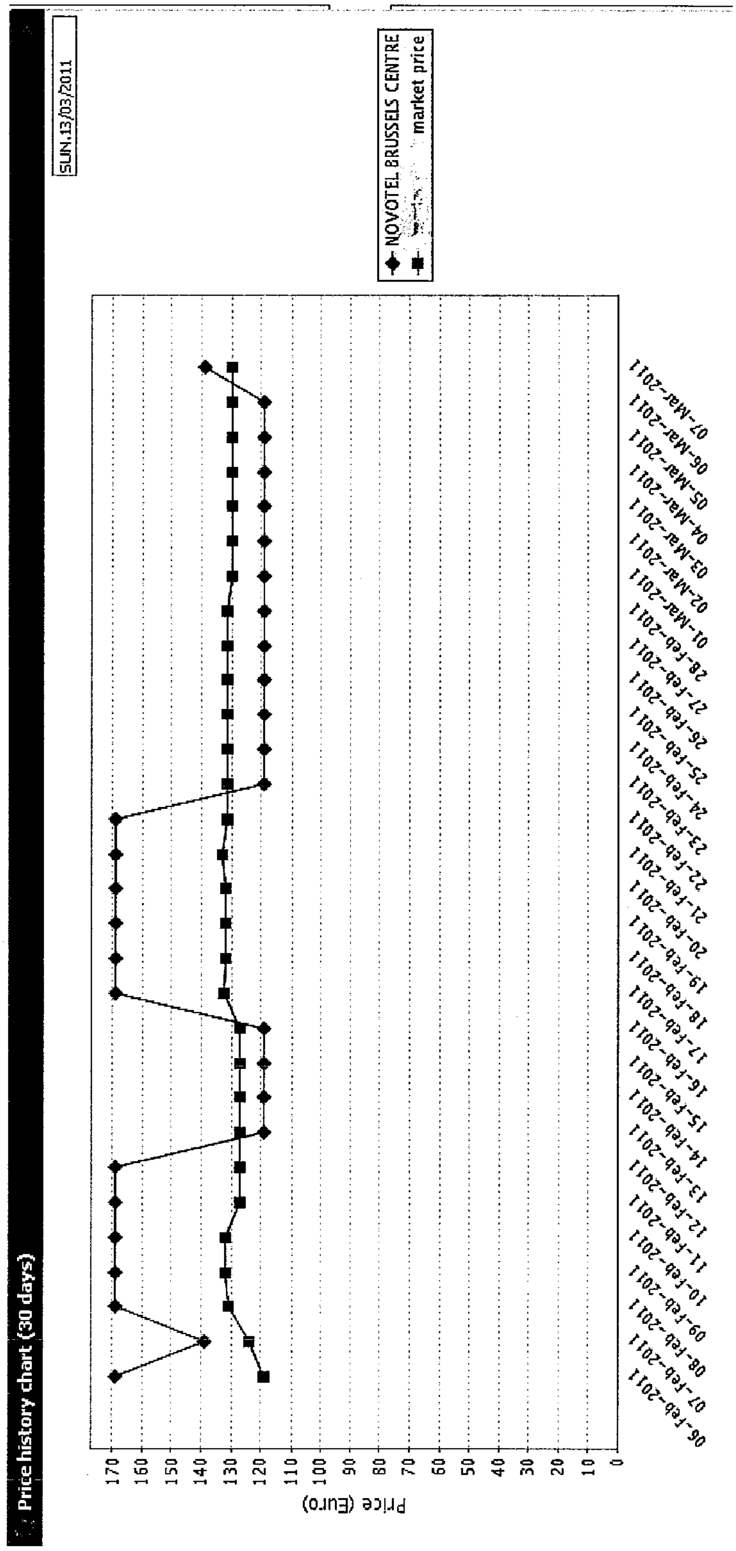
Price history chart (30 days)
SUN.13/03/2011
NOVOTEL BRUSSELS CENTRE
market price
Price (Euro)

*Fig. 13*

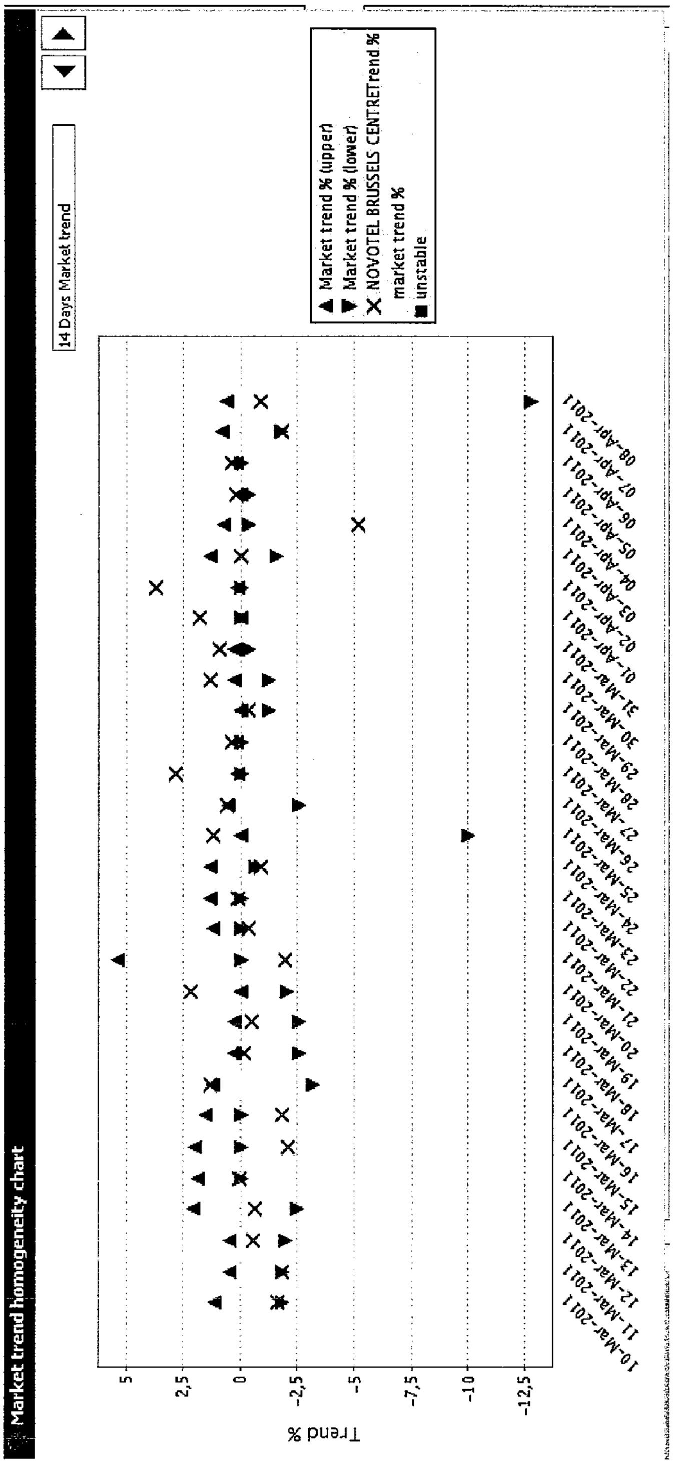
Market trend homogeneity chart
14 Days Market trend
Market trend % (upper)
Market trend % (lower)
NOVOTEL BRUSSELS CENTRETrend %
market trend %
unstable
Trend %
5
2,5
0
-2,5
-5
-7,5
-10
-12,5
10-Mar-2011
11-Mar-2011
12-Mar-2011
13-Mar-2011
14-Mar-2011
15-Mar-2011
16-Mar-2011
17-Mar-2011
18-Mar-2011
19-Mar-2011
20-Mar-2011
21-Mar-2011
22-Mar-2011
23-Mar-2011
24-Mar-2011
25-Mar-2011
26-Mar-2011
27-Mar-2011
28-Mar-2011
29-Mar-2011
30-Mar-2011
31-Mar-2011
01-Apr-2011
02-Apr-2011
03-Apr-2011
04-Apr-2011
05-Apr-2011
06-Apr-2011
07-Apr-2011
08-Apr-2011

Fig. 14

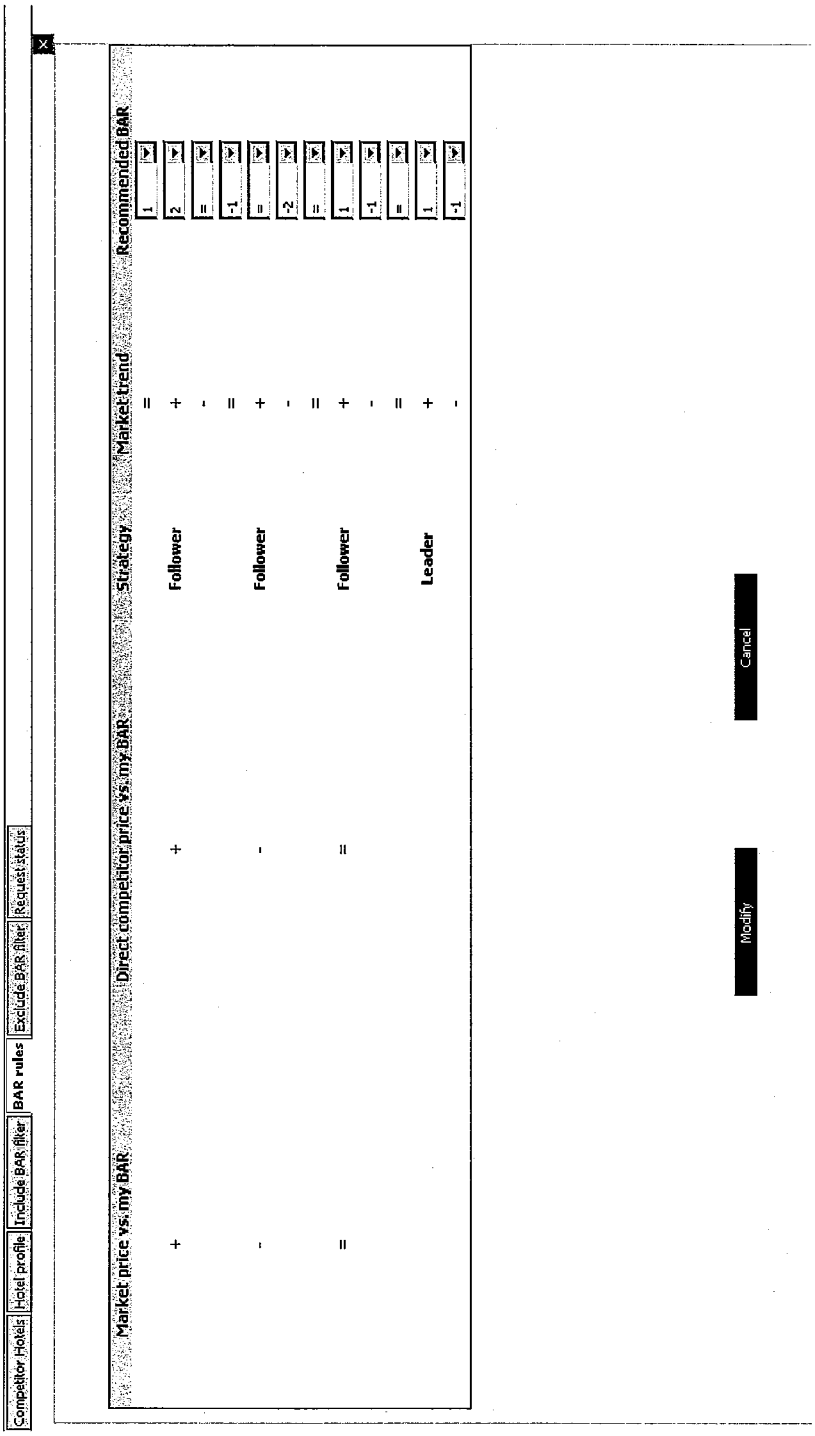
Competitor Hotels
Hotel profile
Include BAR filter
BAR rules
Exclude BAR filter
Request status
Market price vs. my BAR
Direct competitor price vs. my BAR
Strategy
Market trend
Recommended BAR
Follower
Follower
Follower
Leader
Modify
Cancel

Fig. 15

Variance % or Bar level

| Hotel | number of changes (365 days) | Tomorrow | D+7 | D+30 | D +327 |
|---|---|---|---|---|---|
| A | 80 | 0 | 2 | 20 | 65 |
| B | | | | | |
| C | | | | | |
| D | | | | | |
| | | | | | |
| | | | | | |
| | | | | | |

Fig. 16

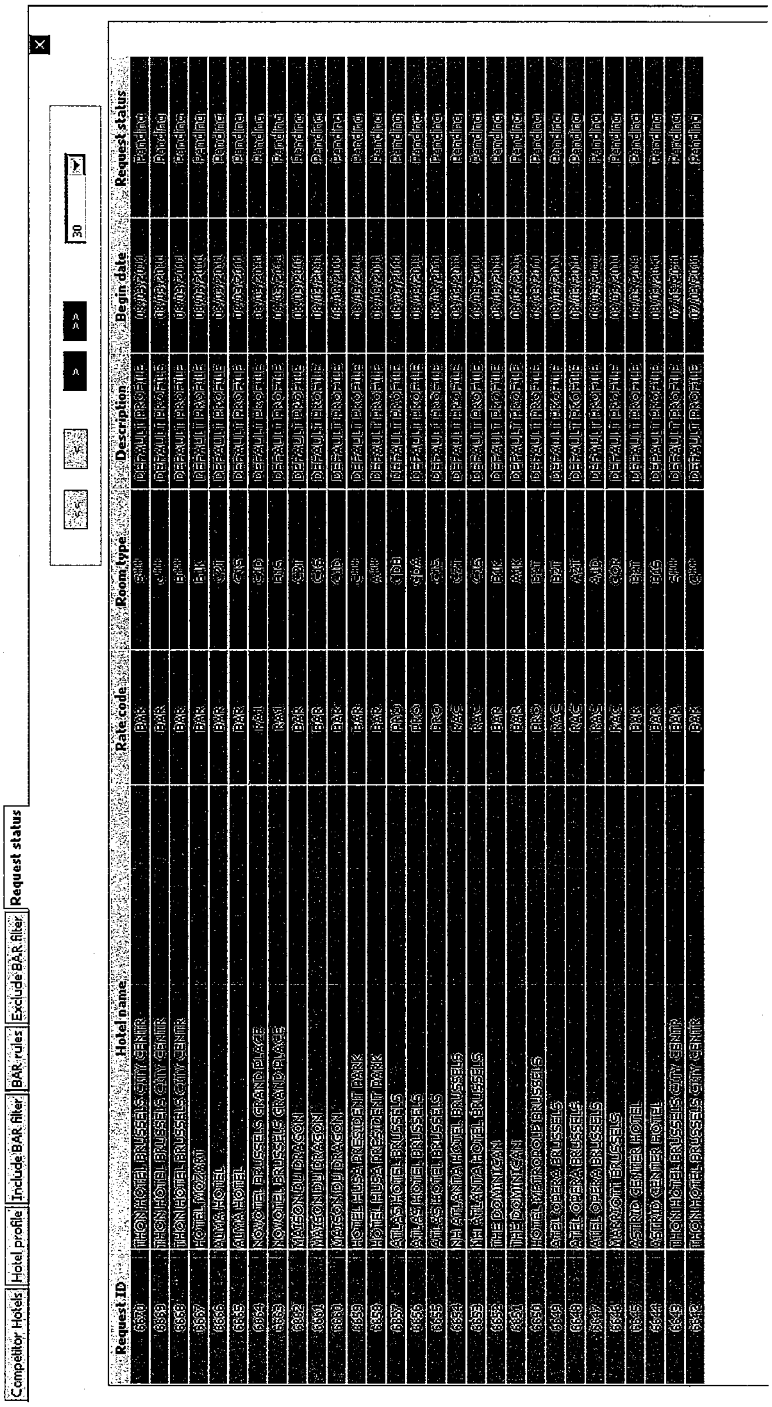
Competitor Hotels
Hotel profile
Include BAR filter
BAR rules
Exclude BAR filter
Request status
Request ID
Hotel name
Rate code
Room type
Description
Begin date
Request status
30

Fig. 17

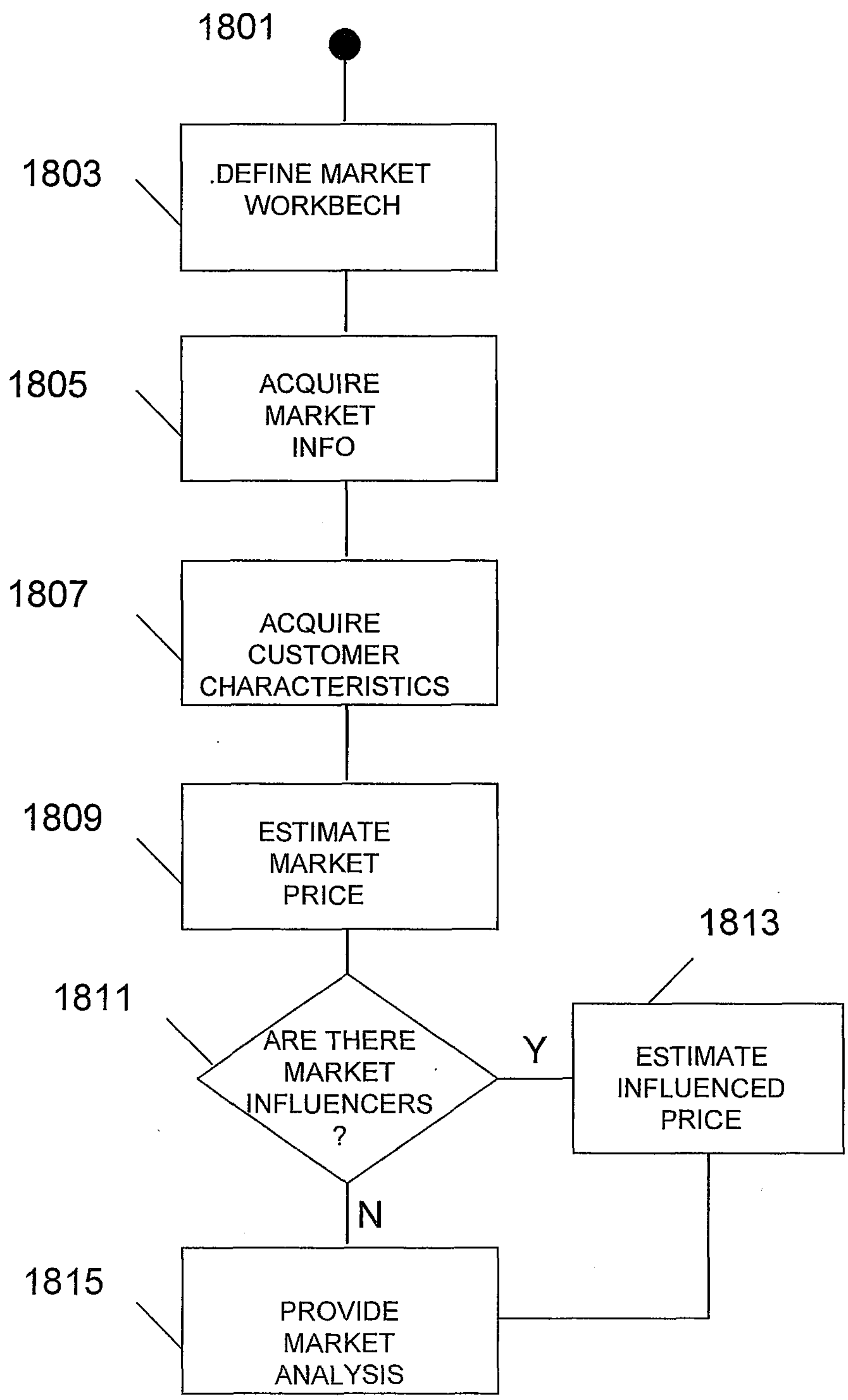
1801
1803
.DEFINE MARKET WORKBECH
1805
ACQUIRE MARKET INFO
1807
ACQUIRE CUSTOMER CHARACTERISTICS
1809
ESTIMATE MARKET PRICE
1813
1811
ARE THERE MARKET INFLUENCERS ?
Y
ESTIMATE INFLUENCED PRICE
N
1815
PROVIDE MARKET ANALYSIS

Fig. 18

Europäisches Patentamt
European Patent Office
Office européen des brevets

# EUROPEAN SEARCH REPORT

Application Number
EP 11 30 5856

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-12 | INV. G06Q30/00 |
| | | | TECHNICAL FIELDS SEARCHED (IPC) |
| | | | G06Q |

1

The present search report has been drawn up for all claims

| Place of search | Date of completion of the search | Examiner |
|---|---|---|
| The Hague | 15 November 2011 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)